# NEUE EUROPÄISCHE PATENTSCHRIFT

(11) **EP 3 043 980 B2**
(45) Veröffentlichungstag und Bekanntmachung des Hinweises auf die Entscheidung über den Einspruch: **01.12.2021**
(45) Hinweis auf die Patenterteilung: 02.08.2017
(21) Anmeldenummer: 15766063.0
(22) Anmeldetag: 25.08.2015
(51) Int. Cl.: B29C 67/00

(54) **BESCHICHTERANORDNUNG FÜR EINEN 3D-DRUCKER UND VERFAHREN ZUM AUFBRINGEN VON ZWEIER SCHICHTEN AUS PARTIKELFÖRMINGEM BAUMATERIAL**
COATING ARRANGEMENT FOR A 3D PRINTER AND METHOD FOR APPLYING TWO LAYERS FROM PARTICULATE CONSTRUCTION MATERIAL
SYSTÈME DE REVÊTEMENT POUR IMPRIMANTE 3D ET PROCÉDÉ D'APPLICATION DE DEUX COUCHES À PARTIR D'UN MATÉRIAU DE CONSTRUCTION DE PARTICULES

(30) Priorität: 29.08.2014 DE 102014112469
(43) Veröffentlichungstag der Anmeldung: 20.07.2016
(73) Patentinhaber: ExOne GmbH, 86368 Gersthofen (DE)
(72) Erfinder: HÖCHSMANN, Rainer, 86863 Langenneufnach (DE); MÜLLER, Alexander, 86420 Diedorf-Vogelsang (DE); KLAUA, Sven, 86161 Augsburg (DE)
(74) Vertreter: Viering, Jentschura & Partner mbB Patent- und Rechtsanwälte
(86) Internationale Anmeldenummer: PCT/EP2015/069448
(87) Internationale Veröffentlichungsnummer: WO 2016/030375

(56) Entgegenhaltungen:
- WO-A1-2008/064620
- WO-A1-2015/151831
- CA-A1- 2 808 937
- DE-A1-102009 056 689
- DE-C1- 10 117 875
- US-A1- 2003 059 492
- US-A1- 2012 266 815

## Beschreibung

Die vorliegende Erfindung betrifft eine Beschichteranordnung für einen 3D-Drucker, einen 3D-Drucker mit solch einer Beschichteranordnung sowie ein Verfahren zum Aufbringen zweier Schichten aus partikelförmigem Baumaterial.

Es sind verschiedene generative Fertigungsverfahren (und folglich verschiedene Arten von 3D-Druckern) bekannt.

Einige generative Fertigungsverfahren haben die folgenden Schritte gemeinsam:
(1) Es wird zunächst Partikelmaterial vollflächig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich selektiv verfestigt, zum Beispiel durch selektives Aufdrucken von Behandlungsmittel, zum Beispiel Bindemittel, (alternativ zum Beispiel durch Lasersintern).
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht vollflächig aufgetragen wird (alternativ können zum Beispiel der Beschichter und die Druckvorrichtung jeweils um eine Schichtdicke angehoben werden).
(4) Schließlich kann das gefertigte Bauteil, das von losem, nicht-verfestigtem Partikelmaterial gestützt und umgeben ist, entpackt werden.

Der Bauraum, in dem das oder die Bauteile gefertigt werden, kann zum Beispiel von einer sogenannten Baubox (auch "Jobbox" genannt) definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden. Ein Beispiel für eine solche Baubox ist zum Beispiel in DE 10 2009 056 696 A1 beschrieben.

In dem obigen Schritt (1) kommt in der Regel eine Beschichteranordnung mit einem Beschichter (auch "Recoater" genannt) zum Einsatz. Es sind unterschiedliche Beschichteranordnungen zur Verwendung in einem 3-Drucker bekannt, mit denen ein partikelförmiges Baumaterial in Form einer gleichmäßigen, vollflächigen Schicht auf das Baufeld (auch Baufläche oder Baubereich genannt) aufgebracht werden kann.

Eine Art von Beschichteranordnung verwendet eine Walze (kurz "Walzen-Beschichter"), vor der zunächst eine Menge an partikelförmigem Baumaterial abgelegt wird und die anschließend horizontal über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden. Beschichteranordnungen mit großen Längen sind mit einem Walzen-Beschichter schlecht/schwierig darzustellen.

Eine ähnliche Art von Beschichteranordnung verwendet eine Schwingkünge anstelle einer Walze. So offenbart die DE 10117875 C1 ein Verfahren, bei dem Partikelmaterial vor der Schwingklinge abgelegt wird und das Partikelmaterial anschließend mittels der Schwingklinge, welche eine Schwingung nach Art einer Dreh- bzw. Schwenkbewegung ausführt, auf einen zu beschichtenden Bereich aufgetragen wird.

Eine andere Art von Beschichteranordnung (sogenannte Beschichteranordnung mit "Behälter-Beschichter", zum Beispiel "Schlitz-Beschichter") verwendet einen Beschichter mit einem Behälter, der zum Beispiel über ein Baufeld hinweg verfahrbar ist und einen inneren Hohlraum zur Aufnahme von partikelförmigem Baumaterial definiert, der in einer Öffnung zum Ausgeben des partikelförmigen Baumaterials auf das Baufeld mündet. Der Beschichter kann langgestreckt sein, um zum Beispiel die Länge oder Breite eines rechteckigen Baufelds zu überspannen bzw. abzudecken. Die Öffnung kann dann als Längsschlitz ausgebildet sein. Der Beschichter kann also horizontal über das Baufeld hinweg verfahren werden und dabei partikelförmiges Baumaterial aus der Öffnung heraus auf das Baufeld ausgeben, um dadurch eine gleichmäßige, vollflächige Schicht auf das Baufeld aufzubringen.

In dem obigen Schritt (2) kann zum Beispiel eine Druckvorrichtung mit einem Druckkopf zum Einsatz kommen, der auf einen Teilbereich der zuvor aufgebrachten Baumaterial-Schicht gesteuert ein Behandlungsmittel aufbringt. Das Behandlungsmittel trägt zu einer (unmittelbaren und/oder späteren) Verfestigung der Baumaterial-Schicht in dem Teilbereich bei. Zum Beispiel kann das Behandlungsmittel ein Bindemittel sein, zum Beispiel eine Bindemittel-Komponente eines Mehrkomponenten-Bindemittels.

Alternativ kann in dem obigen Schritt (2) zum Beispiel ein Laser eingesetzt werden, um einen Teilbereich der zuvor aufgebrachten Baumaterial-Schicht zu verfestigen, insbesondere durch Sintern oder Schmelzen des Baumaterials in dem Teilbereich.

Die vorliegende Erfindung betrifft eine Beschichteranordnung der zweitgenannten Art, kurz eine Beschichteranordnung mit einem "Behälter-Beschichter", zum Beispiel "Schlitz-Beschichter".

Solche Beschichteranordnungen können zum Beispiel mit einer Vibrationsvorrichtung versehen sein, mit welcher das Partikelmaterial in Vibration versetzbar ist, um das Fließ- bzw. Rieselverhalten des partikelförmigen Baumaterials bzw. den Austrag des partikelförmigen Baumaterials aus der Öffnung zu beeinflussen, insbesondere zu fördern. Eine solche Vibrationsvorrichtung kann zum Beispiel von einer Rüttelvorrichtung gebildet sein, mit der zumindest ein Wandabschnitt des Behälters in Vibration versetzt bzw. mit einer Rüttelbewegung beaufschlagt werden kann, um den Austrag des partikelförmigen Baumaterials zu beeinflussen.

Ferner können solche Beschichteranordnungen zum Beispiel mit einer Labyrinth-Struktur im Innern des Behälters versehen sein, welche ein Ausffießen/Austreten des Baumaterials im Stillstand des Beschichters verhindern kann.

Ferner können solche Beschichteranordnungen zum Beispiel mit einem Streichelement versehen sein, mit welchem auf das Baufeld aufgebrachtes Baumaterial überstrichen werden kann, um das Baumaterial zu verdichten und/oder zu nivellieren.

Ein Beispiel für eine Beschichteranordnung mit einem "Schlitz-Beschichter" ist aus der DE 10 2009 056 689 A1 bekannt. Siehe dort zum Beispiel die Figuren 17-20.

Es kann als eine Aufgabe der vorliegenden Erfindung angesehen werden, eine Beschichteranordnung für einen 3D-Drucker mit einem "Behälter-Beschichter" bereitzustellen, die einen erweiterten Anwendungsbereich hat.

Die vorliegende Erfindung stellt eine Beschichteranordnung für einen 3D-Drucker nach Anspruch 1 bereit. Weitere Ausgestaltungen der Beschichteranordnung sind in den abhängigen Ansprüchen 2-12 beschrieben. Anspruch 13 beschreibt einen 3D-Drucker mit einer entsprechenden Beschichteranordnung, und Anspruch 14 beschreibt ein Verfahren zum Aufbringen zweier Schichten aus partikelförmigem Baumaterial.

Gemäß verschiedenen Ausführungsformen kann anschaulich eine Beschichteranordnung bereitgestellt werden, mit der durch eine zweckmäßige Einstellung des Neigungswinkels des Abstreifelements eines Beschichters der Verdichtungsgrad der aufgebrachten Schicht aus dem partikelförmigen Baumaterial zweckmäßig eingestellt werden kann, wodurch letztendlich ein oder mehrere Eigenschaften des Bauteils, wie zum Beispiel eines Gießkerns und/oder einer Gussform, gezielt eingestellt werden können.

Gemäß verschiedenen Ausführungsformen kann anschaulich eine Beschichteranordnung bereitgestellt werden, mit der durch eine Verstellung des Neigungswinkels des Abstreifelements eines Beschichters unterschiedliche Baumaterial-Zusammensetzungen zuverlässig in gleichmäßigen Schichten in/auf ein Baufeld aufbringbar und/oder zweckmäßig verdichtet werden können, so dass letztendlich mit der Beschichteranordnung eine Vielzahl von unterschiedlichen Baumaterial-Zusammensetzungen verarbeitet werden können.

Gemäß verschiedenen Ausführungsformen kann anschaulich eine Beschichteranordnung bereitgestellt werden, mit der durch eine Variation des Neigungswinkels des Abstreifelements eines Beschichters während eines Baujobs der Verdichtungsgrad innerhalb eines herzustellenden Bauteils und/oder dem aufzubauenden Schichtenverbund gezielt variiert werden kann, um ein Bauteil mit unterschiedlichen Verdichtungsgrad-Zonen und/oder mehrere Bauteile mit unterschiedlichem Verdichtungsgrad in einem Baujob herzustellen.

Gemäß verschiedenen Ausführungsformen kann anschaulich eine Beschichteranordnung bereitgestellt werden, mit der durch eine Verstellung bzw. ein Nachstellen des Neigungswinkels des Abstreifelements eines Beschichters während eines Baujobs eine Vielzahl von Baumaterialschichten von gleichbleibender Qualität und/oder Verdichtung aufgebracht werden können, so dass zum Beispiel über einen langen Baujob hinweg und/oder über eine Mehrzahl von Baujobs hinweg eine konstante Qualität und/oder Verdichtung ermöglicht werden kann, insbesondere auf einfache und sichere Weise.

Gemäß verschiedenen Ausführungsformen kann anschaulich eine Beschichteranordnung bereitgestellt werden, mit der gleichmäßige und zweckmäßig verdichtete Baumaterialschichten in kurzer Zeit aufgebracht werden können. Anschaulich kann gemäß verschiedenen Ausführungsformen auf einer Hinfahrt und auf einer Rückfahrt des Beschichters ein jeweils zweckmäßiger Neigungswinkel eingestellt werden, so dass ein bidirektionales Beschichten ermöglicht wird, ohne dass dies auf Kosten der Qualität der aufgebrachten Schicht erfolgen müsste.

Unter partikelförmigem Baumaterial kann im Sinne dieser Anmeldung dabei ein Baumaterial verstanden werden, welches zumindest eine Art von Partikelmaterial (zum Beispiel Sand(körner), zum Beispiel Gießereisand, und/oder Metallpartikel und/oder Kunststoffpartikel) aufweist. Es können auch mehrere unterschiedliche Arten von Partikelmaterial in dem Baumaterial enthalten sein, zum Beispiel ein Gemisch aus neuem Sand und recyceltem Sand oder ein Gemisch aus feinem Sand und grobem Sand oder ein Gemisch aus zwei unterschiedlichen Sandtypen. Das Baumaterial kann ferner zumindest eine flüssige Komponente aufweisen, zum Beispiel eine Bindemittel-Komponente, zum Beispiel einen Aktivator, und/oder einen oder mehrere feste und/oder flüssige Zuschlagstoffe. In dem Fall, dass das Baumaterial eine Bindemittel-Komponente enthält, kann zum Beispiel eine weitere Bindemittel-Komponente, zum Beispiel Furanharz, mittels einer Druckvorrichtung selektiv auf eine zuvor aufgebrachte Baumaterial-Schicht aufgedruckt werden, um diese in einem vorbestimmten Bereich zu verfestigen. Je nach herzustellendem Bauteil, zum Beispiel eine Gussform oder ein Gießkern, und/oder dem Verwendungszweck des jeweiligen Bauteils kann eine speziell dafür zubereitete Baumaterial-Zusammensetzung eingesetzt werden. Die Baumaterial-Zusammensetzung kann dabei definiert werden durch die Anzahl an eingesetzten Komponenten sowie die jeweilige Art und den jeweiligen Anteil der in dem Baumaterial(gemisch) enthaltenen Komponenten, zum Beispiel einschließlich einer jeweiligen Partikelgröße (in dem Fall eines Feststoffes).

Gemäß verschiedenen Ausführungsformen kann eine Beschichteranordnung für einen 3D-Drucker aufweisen:
einen Beschichter (zum Beispiel "Behälter-Beschichter", zum Beispiel "Schlitz-Beschichter", der horizontal über ein Baufeld hinweg verfahrbar ist und eingerichtet ist, um während dieser Horizontalbewegung über das Baufeld partikelförmiges Baumaterial kontinuierlich aus der Öffnung heraus auf das Baufeld auszugeben) mit einem Behälter, der einen inneren Hohlraum zur Aufnahme von partikelförmigem Baumaterial definiert, der in einer Öffnung zum Ausgeben des partikelförmigen Baumaterials mündet (zum Beispiel auf/in ein Baufeld bzw. auf/in einen Bauraum), und einem Streichelement, von dem eine nach unten (zum Beispiel zu dem Baufeld bzw. dem Bauraum hin) ausgerichtete Streichfläche ausgebildet ist und das eingerichtet ist, um aus der Öffnung ausgegebenes Baumaterial mit der Streichfläche zu überstreichen, um dadurch das ausgegebene Partikelmaterial zu nivellieren und/oder zu verdichten, und
eine Einstellvorrichtung, die eingerichtet ist, um einen Neigungswinkel der Streichfläche variabel einzustellen, insbesondere variabel fest einzustellen und/oder variabel einzustellen und (in einer jeweiligen Einstellung) zu halten/fixieren (zum Beispiel für zumindest einen wesentlichen oder überwiegenden Teil einer Fahrt über ein Baufeld hinweg oder während einer gesamten Fahrt über ein Baufeld hinweg).

Der Beschichter kann zum Beispiel in horizontaler Richtung verfahrbar sein, zum Beispiel über ein Baufeld hinweg. Zum Beispiel kann der Beschichter hierzu entlang einer Linearführungsstruktur verfahrbar sein, zum Beispiel mittels eines Schlittens, an dem der Beschichter befestigt ist.

Der Behälter kann zum Beispiel länglich ausgebildet sein, wobei sich die Längsachse zum Beispiel in der horizontalen Richtung erstreckt, die senkrecht zu der Richtung ist, in der der Beschichter verfahrbar ist. Die Öffnung kann dabei zum Beispiel als Längsschlitz ausgebildet sein, dessen Längsachse sich in der horizontalen Richtung erstreckt, die senkrecht zu der Richtung ist, in der der Beschichter verfahrbar ist, und/oder parallel ist zu der Längsrichtung des Behälters.

Der Behälter kann sich im Querschnitt zum Beispiel nach unten hin verjüngen, und kann im Querschnitt zum Beispiel trichterförmig ausgebildet sein.

Nach oben hin kann der Behälter zum Beispiel offen sein. Oberhalb des Behälters kann zum Beispiel ein zweiter Behälter angeordnet sein.

Die Öffnung bzw. der Längsschlitz kann sich zum Beispiel an einem unteren Endabschnitt des Behälters befinden, d.h. zum Beispiel an einem dem Baufeld zugewandten Endabschnitt des Beschichters, und kann zum Beispiel nach unten zu dem Baufeld hin ausgerichtet sein.

Das Baufeld kann zum Beispiel von einer Bauplattform und/oder Baubox (auch "Jobbox" genannt) definiert werden, über/auf bzw. in der ein Bauteil mittels eines 3D-Druckers in einem generativen Herstellungsverfahren aufgebaut wird/werden kann. Die Baubox kann zum Beispiel eine höhenverstellbare Bauplattform aufnehmen, die während des generativen Herstellungsverfahrens (bzw. während eines sogenannten "Baujobs") schrittweise abgesenkt wird. Der Antrieb für die Höhenverstellung kann zum Beispiel entweder direkt in die Baubox ("mitfahrend") oder zum Beispiel stationär ("anlagenfest") in dem 3D-Drucker vorgesehen sein. Die Baubox kann zum Beispiel aus dem 3D-Drucker heraus und in diesen hinein verfahrbar sein, zum Beispiel über eine Rollenbahn und/oder über einen eigenen, in die Baubox integrierten Fahrantrieb. Die Baubox kann zum Beispiel wie eingangs beschrieben ausgebildet sein, zum Beispiel wie in DE 10 2009 056 696 A1 beschrieben.

Die im Folgenden gemachten Angaben gelten sowohl für ein Streichelement als auch für zwei oder mehr Streichelemente, also ein jeweiliges Streichelement.

Das Streichelement kann zum Beispiel von dem Behälter mitausgebildet sein, zum Beispiel von einer Unterseite desselben, oder kann zum Beispiel als separates Element ausgebildet und an dem Beschichter angebracht sein, zum Beispiel an einer Trägerstruktur desselben oder an dem Behälter. In dem Fall, dass das Streichelement als separates Element an dem Beschichter angebracht ist, kann das Streichelement zum Beispiel fest oder bewegbar (zum Beispiel schwenkbar) an dem Beschichter angebracht sein. In dem ersten Fall kann das Streichelement über eine Bewegung, zum Beispiel Schwenkbewegung, des Beschichters bewegt werden, um den Neigungswinkel seiner Streichfläche einzustellen. In dem zweiten Fall kann das Streichelement direkt bzw. selbst bewegt werden, um den Neigungswinkel seiner Streichfläche einzustellen.

Zum Nivellieren und/oder Verdichten von Baumaterial ist das Streichelement zum Beispiel in Fahrtrichtung hinter der Öffnung angeordnet, zum Beispiel mit einer nach hinten hin abfallenden Neigung bzw. einer in Fahrtrichtung ansteigenden Neigung. Der Neigungswinkel kann zum Beispiel ein spitzer Winkel sein, zum Beispiel ein Winkel von kleiner gleich 5°, zum Beispiel ein Winkel von kleiner gleich 4°, zum Beispiel ein Winkel von kleiner gleich 3°, zum Beispiel ein Winkel von kleiner gleich 2°, zum Beispiel ein Winkel von kleiner gleich 1°.

Der Beschichter kann zum Beispiel nur ein Streichelement aufweisen, wobei die Beschichteranordnung unidirektional betrieben wird. Der Beschichter kann zum Beispiel zwei Streichelemente aufweisen, wobei die Beschichteranordnung bidirektional betrieben wird. In letzterem Fall können die Streichelemente zum Beispiel auf gegenüberliegenden Seiten der Öffnung angeordnet sein (zum Beispiel in Querrichtung), und der Neigungswinkel eines jeweiligen Streichelements kann zum Beispiel mittels der Einstellvorrichtung variabel einstellbar sein. In letzterem Fall können die Streichelemente mit ihren Streichflächen zum Beispiel koplanar angeordnet sein.

Die Streichfläche des Streichelements kann zum Beispiel im Wesentlich planar ausgebildet sein. Zum Beispiel kann das Streichelement eine langgestreckte Form haben, die sich zum Beispiel im Wesentlichen parallel zu der Längsrichtung des Behälters erstrecken kann, zum Beispiel im Wesentlichen entlang des gesamten Schlitzes desselben. Zum Beispiel kann das Streichelement als Streichleiste und/oder als Streichklinge ausgebildet sein. Zum Beispiel kann das Streichelement aus Metall, zum Beispiel Stahl, hergestellt sein.

Das Streichelement kann zum Beispiel unterhalb der Öffnung angeordnet sein, zum Beispiel in vertikaler Richtung unterhalb der Öffnung, zum Beispiel mit (geringem) vertikalem Abstand zu der Öffnung. Mit anderen Worten kann das Streichelement außerhalb bzw. unterhalb des Behälter-Innenraums angeordnet sein, zum Beispiel außerhalb bzw. unterhalb des Behälters. In horizontaler Richtung kann das Streichelement zum Beispiel seitlich neben der Öffnung angeordnet sein.

Die Einstellvorrichtung kann zum Beispiel zusammen mit dem Beschichter über das Baufeld hinweg verfahrbar sein.

Die Einstellvorrichtung kann zum Beispiel eingerichtet sein, um den Neigungswinkel der Streichfläche gegenüber einer ortsfesten Bezugsebene variabel einzustellen, zum Beispiel gegenüber einer horizontalen Fläche und/oder einer zu einer Bauplattform parallelen Fläche und/oder einer zu dem Baufeld parallelen Fläche und/oder einer zu der zuletzt aufgebrachten Schicht parallelen Fläche. Der Neigungswinkel kann zum Beispiel ein spitzer Winkel sein.

Gemäß verschiedenen Ausführungsformen kann die Einstellvorrichtung zum Beispiel einen Antrieb aufweisen, mit dem der Neigungswinkel der Streichfläche veränderbar ist. Unter Antrieb wird dabei insbesondere ein nicht-manueller Antrieb verstanden. Der Antrieb kann zum Beispiel eingerichtet sein, um das Streichelement mittelbar oder unmittelbar zu bewegen, zum Beispiel zu schwenken.

Gemäß verschiedenen Ausführungsformen kann der Antrieb zum Beispiel ein Linearantrieb oder ein Dreh- oder Schwenkantrieb sein. Mit anderen Worten gibt der Antrieb zum Beispiel eine translatorische Bewegung aus bzw. erzeugt eine solche (diese kann wiederum zum Schwenken des Schließelements und/oder des Beschichters genutzt/umgewandelt werden), oder gibt ein Drehmoment über mindestens eine volle bzw. über weniger als eine volle Umdrehung aus.

Gemäß verschiedenen Ausführungsformen kann der Antrieb zum Beispiel aus der Gruppe ausgewählt sein, die aus einem hydraulischen Antrieb, einem pneumatischen Antrieb, einem elektrischen Antrieb und Kombinationen davon besteht.

Gemäß verschiedenen Ausführungsformen kann der Antrieb zum Beispiel eingerichtet sein, um den Neigungswinkel der Streichfläche unmittelbar über den Antrieb selbst variabel einzustellen. Dabei kann der Antrieb zum Beispiel als elektrischer Antrieb ausgebildet sein. Der Antrieb kann also zum Beispiel eingerichtet sein, um das Streichelement und/oder den Beschichter in einer jeweiligen Position, zum Beispiel Schwenkposition, zu halten.

Gemäß verschiedenen Ausführungsformen kann die Einstellvorrichtung zum Beispiel ferner einen Anschlag aufweisen, der eingerichtet ist, um eine von dem Antrieb erzeugte Bewegung (von zum Beispiel dem Streichelement und/oder dem Beschichter) auf ein bestimmtes Ausmaß zu begrenzen, um hierdurch den Neigungswinkel der Streichfläche einzustellen. Zum Beispiel kann mit dem Anschlag ein Schwenkbereich des Streichelements und/oder des Beschichters eingestellt werden, zum Beispiel ein vertikaler Schwenkbereich.

Gemäß verschiedenen Ausführungsformen kann der Endanschlag zum Beispiel variabel einstellbar sein, so dass durch ein Verstellen des Anschlags der Neigungswinkel der Streichfläche einstellbar ist. Der Anschlag kann dabei zum Beispiel manuell oder elektrisch verstellbar sein.

Gemäß der Erfindung ist die Einstellvorrichtung als Schwenkvorrichtung ausgebildet.

Gemäß der Erfindung ist die Schwenkvorrichtung eingerichtet, um den Beschichter zu schwenken, um dadurch das Streichelement zu schwenken und hierdurch den Neigungswinkel der Streichfläche einzustellen. Es kann also zum Beispiel der gesamte Beschichter um eine körpereigene Schwenkachse geschwenkt werden, um den Neigungswinkel der Streichfläche einzustellen, bzw. der Beschichter kann als schwenkbarer Beschichter ausgebildet sein. Der Beschichter kann zum Beispiel schwenkbar sein um eine feste Schwenkachse und/oder eine körpereigene Schwenkachse und/oder eine horizontale Schwenkachse, die zum Beispiel parallel ist zu der Beschichter-Längsachse und/oder senkrecht zu der Verfahr-Richtung des Beschichters, und/oder in einem vertikalen Schwenkbereich und/oder mittels des oben beschriebenen Antriebs.

Gemäß verschiedenen Ausführungsformen kann die Beschichteranordnung zum Beispiel ferner einen Lagerbock aufweisen, an dem der Beschichter schwenkbar abgestützt ist, zum Beispiel an einer seiner Stirnseiten, zum Beispiel mittels eines Schwenkzapfens. Der Lagerbock kann zum Beispiel gemeinsam mit dem Beschichter verfahrbar sein. An seiner anderen Stirnseite kann der Beschichter zum Beispiel über einen weiteren Lagerbock schwenkbar abgestützt sein. Der oben beschriebene Antrieb kann zum Beispiel an dem Lagerbock montiert sein, zum Beispiel zwischen Lagerbock und Beschichter.

Gemäß verschiedenen Ausführungsformen kann die Beschichteranordnung zum Beispiel ferner eine Linearführungsstruktur aufweisen, entlang welcher der Lagerbock verfahrbar ist, zum Beispiel in einer horizontalen Richtung, zum Beispiel über ein Baufeld bzw. einen Bauraum hinweg.

Gemäß verschiedenen Ausführungsformen kann die Beschichteranordnung zum Beispiel ferner eine Steuereinheit (zum Beispiel "Controller" und/oder elektronische Steuereinheit) aufweisen, die mit der Einstellvorrichtung, zum Beispiel mit dem Antrieb und/oder dem Anschlag, in Verbindung steht und eingerichtet ist, um die Einstellvorrichtung derart anzusteuern, dass diese den Neigungswinkel einstellt/verstellt, zum Beispiel auf einen anfänglichen Wert einstellt und/oder nachstellt, zum Beispiel vor einem Baujob und/oder während eines Baujobs, zum Beispiel für ein zweckmäßiges Verdichten/Nivellieren. Das heißt, die Steuereinheit stellt den Neigungswinkel mittels der Einstellvorrichtung ein. Mit anderen Worten wird der Neigungswinkel (unter Verwendung der Einstellvorrichtung) gesteuert eingestellt, zum Beispiel antriebsgesteuert.

Gemäß verschiedenen Ausführungsformen kann die Steuereinheit zum Beispiel eingerichtet sein, um den Neigungswinkel gemäß einer verwendeten/eingesetzten Partikelmaterial-Zusammensetzung und/oder ein oder mehreren Umgebungsbedingungen (zum Beispiel Luft-Feuchtigkeit und/oder Umgebungstemperatur und/oder Umgebungsdruck) und/oder einem gewünschten Verdichtungsgrad (von zum Beispiel der aufzubringenden Schicht und/oder dem herzustellenden Bauteil) auf einen anfänglichen Wert einzustellen, zum Beispiel basierend auf einem jeweils zugehörigen, in der Steuereinheit hinterlegten Parameter oder Parametersatz (zum Beispiel aufweisend einen Antriebsparameter und/oder Schwenk-Winkel). Die verwendete/eingesetzte Partikelmaterial-Zusammensetzung und/oder die ein oder mehreren Umgebungsbedingungen und/oder der gewünschte Verdichtungsgrad können zum Beispiel über eine Bedienstation eines 3D-Druckers der Steuereinheit vorgebbar sein, zum Beispiel über ein Bedienpanel. Die verwendete/eingesetzte Partikelmaterial-Zusammensetzung und/oder die ein oder mehreren Umgebungsbedingungen können zum Beispiel von entsprechenden Sensoren automatisch erfasst und an die Steuereinheit weitergegeben werden.

Gemäß verschiedenen Ausführungsformen kann die Beschichteranordnung zum Beispiel ferner einen Neigungssensor aufweisen, der eingerichtet ist, um einen Wert zu erfassen, der repräsentativ ist für den momentanen Neigungswinkel der Streichfläche. Der Neigungssensor kann zum Beispiel ein oder mehrere Beschleunigungssensoren aufweisen. Es versteht sich, dass auch ein anderer, geeigneter Neigungssensor verwendet werden kann. Der Neigungssensor kann zum Beispiel an dem Beschichter befestigt sein, zum Beispiel an dessen Trägerstruktur oder an dem Streichelement selbst

Der Neigungssensor kann zum Beispiel mit der Steuereinheit in Verbindung stehen, um den erfassten Wert an die Steuereinheit weiterzugeben.

Die Steuereinheit kann zum Beispiel eingerichtet sein, um den Neigungswinkel basierend auf dem von dem Neigungssensor erfassten Wert einzustellen, zum Beispiel auf einen anfänglichen Wert einzustellen und/oder nachzustellen (zum Beispiel durch Steuern oder Regeln). Die Steuereinheit kann zum Beispiel eingerichtet sein, um den Neigungswinkel basierend auf dem von dem Neigungssensor erfassten Wert und gemäß einer verwendeten/eingesetzten Partikelmaterial-Zusammensetzung und/oder ein oder mehreren Umgebungsbedingungen und/oder einem gewünschten Verdichtungsgrad auf einen anfänglichen Wert einzustellen. Der Neigungssensor kann dabei zum Beispiel für eine Überprüfung und/oder Orientierung und/oder Nullpunktbestimmung verwendet werden. Zum Beispiel kann mit Hilfe des Neigungssensors vermieden werden, dass aufgrund von zum Beispiel Verschleiß und/oder Temperaturschwankungen ein eingestellter/tatsächlicher Neigungswinkel von einem gewünschten Neigungswinkel abweicht.

Gemäß verschiedenen Ausführungsformen kann die Beschichteranordnung zum Beispiel ferner einen Dichtesensor aufweisen, der eingerichtet ist, um einen Wert zu erfassen, der repräsentativ ist für die Dichte (zum Beispiel den Verdichtungsgrad der Schicht) einer aufgebrachten Schicht. Der Dichtesensor kann zum Beispiel ein oder mehrere auf das Baufeld gerichtete optische Sensoren aufweisen, die eine aufgebrachte Baumaterialschicht optisch abtasten und daraus Rückschlüsse auf den Verdichtungsgrad ziehen, zum Beispiel indem die Porosität der Schicht ermittelt wird. Es versteht sich, dass auch ein anderer, geeigneter Dichtesensor verwendet werden kann. Der Dichtesensor kann zum Beispiel an der Trägerstruktur angebracht sein.

Der Dichtesensor kann zum Beispiel mit einer der oben beschriebenen Steuereinheiten in Verbindung stehen, um den erfassten Wert an die Steuereinheit weiterzugeben.

Die Steuereinheit kann zum Beispiel eingerichtet sein, um den Neigungswinkel basierend auf dem von dem Dichtesensor erfassten Wert einzustellen, zum Beispiel nachzustellen (zum Beispiel bei einer vorbestimmten Abweichung von einem erwarteten Dichtewert (zum Beispiel Sollwert) oder Dichtewertbereich), zum Beispiel während eines Baujobs (=Fertigung von ein oder mehreren Teilen in einem zugehörigen Bauraum), zum Beispiel um die Dichte auf einen Sollwert zu regeln und/oder einen Neigungswinkel-Sollwert in Abhängigkeit des erfassten Dichte-Werts zu verändern und/oder eine Störgröße zu reduzieren. Eine Störgröße kann zum Beispiel eine Änderung der Baumaterial-Zusammensetzung (zum Beispiel eine Änderung der Körnung derselben) und/oder eine Änderung einer oder mehrerer Umgebungsbedingungen sein. Zum Beispiel kann sich die Luft-Feuchtigkeit und/oder Temperatur während eines Baujobs oder über mehrere Baujobs hinweg Wesentlich verändern, und/oder eine Baumaterial-Zusammensetzung, die zum Beispiel von einer Beschichter-Beschickungseinheit mit Mischbehälter (zum Beispiel enthalten ein Rührwerk) bereitgestellt wird, kann sich Wesentlich ändern, was jeweils einen Einfluss haben kann auf die mit einem bestimmten Neigungswinkel erzielte Verdichtung. Eine solche Veränderung bzw. Verdichtungs-Abweichung kann von dem Dichtesensor erfasst werden, und die Steuereinheit kann entsprechend darauf reagieren, zum Beispiel mit einer Dichte-Regelung oder Dichte-Steuerung. Alternativ oder zusätzlich kann die Steuereinheit eine Warnung ausgeben und/oder den Baujob unterbrechen und/oder abbrechen, wenn mittels des Dichtesensors eine vorbestimmte Abweichung von einem erwarteten Dichtewert oder Dichtewertbereich detektiert wird.

Gemäß verschiedenen Ausführungsformen kann bei der Beschichteranordnung zum Beispiel:
der Beschichter als bidirektionaler Beschichter ausgebildet sein, der eingerichtet ist, um Baumaterial auf einer Hinfahrt und einer Rückfahrt (zum Beispiel auf jeder von zwei unmittelbar aufeinanderfolgenden Fahrten) des Beschichters auszugeben,
der Beschichter auf jeder von zwei sich gegenüberliegenden Seiten der Öffnung ein Streichelement aufweisen, so dass während der Hinfahrt aus der Öffnung ausgegebenes partikelförmiges Baumaterial mit einem ersten der Streichelemente überstreichbar ist und während der Rückfahrt aus der Öffnung ausgegebenes partikelförmiges Baumaterial mit einem zweiten der Streichelemente überstreichbar ist, und
die Einstellvorrichtung eingerichtet sein, um für die Hinfahrt den Neigungswinkel (zum Beispiel auch die Position) der Streichfläche des ersten Streichelements für eine Nivellierung und/oder Verdichtung des ausgegebenen partikelförmigen Baumaterials und für die Rückfahrt den Neigungswinkel (zum Beispiel auch die Position) der Streichfläche des zweiten Streichelements für eine Nivellierung und/oder Verdichtung des ausgegebenen partikelförmigen Baumaterials einzustellen.

Die Einstellvorrichtung kann also zum Beispiel eingerichtet sein, um während zwei unmittelbar aufeinanderfolgenden Fahrten jeweils den Neigungswinkel der Streichfläche des in Fahrtrichtung hinten gelegenen Streichelements für eine Nivellierung und/oder Verdichtung des ausgegebenen partikelförmigen Baumaterials einzustellen.

Zum Beispiel kann die Beschichteranordnung eine Steuereinheit (zum Beispiel eine wie oben beschrieben ausgebildete Steuereinheit) aufweisen, die eingerichtet ist, um die Einstellvorrichtung derart anzusteuern, dass diese für die Hinfahrt den Neigungswinkel (zum Beispiel auch die Position) der Streichfläche des ersten Streichelements für eine Nivellierung und/oder Verdichtung des ausgegebenen partikelförmigen Baumaterials und für die Rückfahrt den Neigungswinkel (zum Beispiel auch die Position) der Streichfläche des zweiten Streichelements für eine Nivellierung und/oder Verdichtung des ausgegebenen partikelförmigen Baumaterials einstellt.

Gemäß verschiedenen Ausführungsformen kann die Einstellvorrichtung zum Beispiel eingerichtet sein, um den Neigungswinkel der Streichfläche des ersten Streichelements und den Neigungswinkel der Streichfläche des zweiten Streichelements gemeinsam zu verstellen, d.h., wenn der Winkel der einen Streichfläche verstellt wird, wird auch der Winkel der anderen Streichfläche verstellt.

Gemäß verschiedenen Ausführungsformen kann die Einstellvorrichtung zum Beispiel eingerichtet sein, um den Beschichter für die Hinfahrt in eine erste Richtung zu schwenken, um dadurch den Neigungswinkel der Streichfläche des ersten Streichelements für eine Nivellierung und/oder Verdichtung des ausgegebenen partikelförmigen Baumaterials einzustellen, und um den Beschichter für die Rückfahrt in eine zweite, der ersten Richtung entgegengesetzten Richtung zu schwenken, um dadurch den Neigungswinkel der Streichfläche des zweiten Streichelements für eine Nivellierung und/oder Verdichtung des ausgegebenen partikelförmigen Baumaterials einzustellen.

Zum Beispiel kann die Beschichteranordnung eine Steuereinheit (zum Beispiel eine wie oben beschrieben ausgebildete Steuereinheit) aufweisen, die eingerichtet ist, um die Einstellvorrichtung derart anzusteuern, dass diese den Beschichter für die Hinfahrt in eine erste Richtung schwenkt, um dadurch den Neigungswinkel der Streichfläche des ersten Streichelements für eine Nivellierung und/oder Verdichtung des ausgegebenen partikelförmigen Baumaterials einzustellen, und den Beschichter für die Rückfahrt in eine zweite, der ersten Richtung entgegengesetzte Richtung schwenkt, um dadurch den Neigungswinkel der Streichfläche des zweiten Streichelements für eine Nivellierung und/oder Verdichtung des ausgegebenen partikelförmigen Baumaterials einzustellen.

Gemäß verschiedenen Ausführungsformen kann ein 3D-Drucker (oder "3D-Druckanlage") zum Beispiel eine Beschichteranordnung aufweisen, die wie oben beschrieben ausgestaltet ist.

Zum Beispiel können mehrere 3D-Drucker eine 3D-Druckeranordnung bilden.

Zum Beispiel kann der (jeweilige) 3D-Drucker ferner aufweisen:
eine Druckvorrichtung zum selektiven, gesteuerten Ausgeben von Behandlungsmittel, die eingerichtet ist, um einen vorbestimmten Teilbereich einer zuvor aufgebrachten Schicht aus Baumaterial mit Behandlungsmittel zu bedrucken (das mittels der Druckvorrichtung ausgegebene Behandlungsmittel trägt zu einer selektiven Verfestigung bei und kann zum Beispiel eine Bindemittelkomponente eines Mehrkomponentenbindemittels sein, wobei eine weitere Bindemittelkomponente in dem Baumaterial enthalten oder diesem zugegeben wird); und/oder
eine in den 3D-Drucker integrierte Beschickungseinheit, mit der Baumaterial frisch zubereitbar und in den Beschichter zuführbar ist, und/oder
ein oder mehrere Bauplattformen und/oder Bauboxen, die ein jeweiliges Baufeld definieren.

Die Druckvorrichtung kann zum Beispiel horizontal verfahrbar sein, zum Beispiel in einer Richtung senkrecht zu der Richtung, in der der mindestens eine Beschichter verfahrbar ist. Die Druckvorrichtung kann zum Beispiel eingerichtet sein, um mehrere Baufelder zu bedienen. Die Druckvorrichtung kann zum Beispiel zusätzlich in der Richtung verfahrbar sein, in der auch der mindestens eine Beschichter verfahrbar ist, so dass sie das oder die Baufelder mäanderförmig abfahren kann, zum Beispiel in einer U-Form.

Alternativ kann eine jeweilige Baumaterialschicht zum Beispiel mit einem Laser selektiv verfestigt, zum Beispiel gesintert, werden (sogenanntes "selektives Lasersintern").

Die Beschickungseinheit kann zum Beispiel einen Mischbehälter mit Rührwerk sowie ein oder mehrere Vorratsbehälter aufweisen, von denen aus ein jeweiliges Partikelmaterial in den Mischbehälter einspeisbar ist. Der Mischbehälter mit Rührwerk sowie die ein oder mehreren Vorratsbehälter können in vertikaler Richtung zum Beispiel über dem mindestens einen Baufeld angeordnet sein. Ferner kann der Mischbehälter zum Beispiel über eine Dosierpumpe mit einem Flüssigkeitsbehälter in Verbindung stehen, aus dem eine flüssige Komponente in den Mischbehälter einspeisbar ist. Der Mischbehälter kann zum Beispiel einen Ausgabeschacht haben, über den der Beschichter mit frisch zubereitetem Baumaterial befüllt werden kann, wenn er in eine Befüllungsposition verfahren ist.

Gemäß verschiedenen Ausführungsformen kann ein Verfahren zum Aufbringen zweier (zum Beispiel mehrerer) Schichten aus partikelförmigem Baumaterial bereitgestellt sein, bei dem
ein Beschichter mit einem Behälter, der einen inneren Hohlraum hat, der mit partikelförmigem Baumaterial gefüllt ist und in einer Öffnung zum Ausgeben des partikelförmigen Baumaterials mündet, in einer ersten Richtung über ein Baufeld hinweg bewegt wird, um während einer ersten Fahrt eine erste Schicht aus Baumaterial auszubilden,
das während der ersten Fahrt aus der Öffnung ausgegebene partikelförmige Baumaterial mit einem ersten Streichelement, von dem eine dem Baufeld zugewandte Streichfläche ausgebildet ist, überstrichen wird, um das ausgegebene Partikelmaterial mit der Streichfläche zu nivellieren und/oder zu verdichten,
der Beschichter in einer zweiten Richtung (die der ersten zum Beispiel entgegengesetzt ist) über das Baufeld hinweg bewegt wird, um während einer zweiten Fahrt eine zweite Schicht aus Baumaterial auszubilden,
das während der zweiten Fahrt aus der Öffnung ausgegebene partikelförmige Baumaterial mit einem zweiten Streichelement, von dem eine dem Baufeld zugewandte Streichfläche ausgebildet ist, überstrichen wird, um das ausgegebene Partikelmaterial mit der Streichfläche zu nivellieren und/oder zu verdichten,
der Beschichter für die erste Fahrt in eine erste Richtung geschwenkt wird (zum Beispiel gesteuert), um dadurch den Neigungswinkel der Streichfläche des ersten Streichelements für eine Nivellierung und/oder Verdichtung des ausgegebenen partikelförmigen Baumaterials einzustellen, insbesondere fest einzustellen und/oder einzustellen und dort zu halten, und
der Beschichter für die zweite Fahrt in eine zweite Richtung geschwenkt wird (zum Beispiel gesteuert), um dadurch den Neigungswinkel der Streichfläche des zweiten Streichelements für eine Nivellierung und/oder Verdichtung des ausgegebenen partikelförmigen Baumaterials einzustellen, insbesondere fest einzustellen und/oder einzustellen und dort zu halten.

Das beschriebene Verfahren kann zum Beispiel Teil eines generativen Herstellungsverfahrens sein.

In den oben beschriebenen Ausführungsformen, für den Fall von zwei oder mehr Streichelementen und einem Schwenken des Beschichters, kann der Beschichter in beide Richtungen um den gleichen Betrag ausgelenkt bzw. geschwenkt werden und/oder kann der vertikale Schwenkbereich von einer vertikalen Linie halbiert werden/sein.

Beispielgebende, aber nicht einschränkende Ausführungsformen der Erfindung sind in den Figuren dargestellt und werden im Folgenden näher erläutert.

Es zeigen:
Figur 1 eine Seitenansicht einer Beschichteranordnung gemäß einer Ausführungsform.
Figur 1a einen vergrößerten Abschnitt der Seitenansicht aus Figur 1.
Figur 2 eine Perspektivansicht auf eine Stirnseite der Beschichteranordnung aus Figur 1.
Figur 3 eine weitere Perspektivansicht auf die Stirnseite aus Figur 2.
Figur 4 eine geschnittene Perspektivansicht der Beschichteranordnung aus Figur 1.
Figur 5 eine geschnittene Perspektivansicht der Beschichteranordnung aus Figur 1.
Figur 6 eine Querschnittansicht durch die Beschichteranordnung aus Figur 1 an einer ersten Längsposition.
Figur 7 eine Querschnittansicht durch die Beschichteranordnung aus Figur 1 an einer zweiten Längsposition.
Figur 8a eine weitere Querschnittansicht durch die Beschichteranordnung, wobei die Schließvorrichtung geöffnet ist.
Figur 8b eine weitere Querschnittansicht durch die Beschichteranordnung, wobei die Schließvorrichtung geschlossen ist.
Figur 9 eine Querschnittansicht durch ein Schließelement zur Verwendung in einer erfindungsgemäßen Beschichteranordnung, in einem geöffneten Zustand des Schließelements.
Figur 10 einen weiteren vergrößerten Abschnitt der Seitenansicht aus Figur 1.
Figur 11 einen 3D-Drucker gemäß einer Ausführungsform, wobei das Anlagengehäuse und die Beschickungseinheit weggelassen sind.
Figur 12 den 3D-Drucker aus Figur 11, diesmal mit einem Großteil des Anlagengehäuses und mit integrierter Beschickungseinheit.

Die Figuren 13 und 14 in einer Draufsicht bzw. Perspektivansicht von oben eine 3D-Druckeranordnung, mit einem ersten und einem zweiten 3D-Drucker.

Die Figuren 15a bis 15c verschiedene Ansichten einer Beschichteranordnung gemäß einer weiteren Ausführungsform.

Die Figuren 16a bis 16d Beschichteranordnungen gemäß verschiedenen Ausführungsformen.

In der folgenden ausführlichen Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

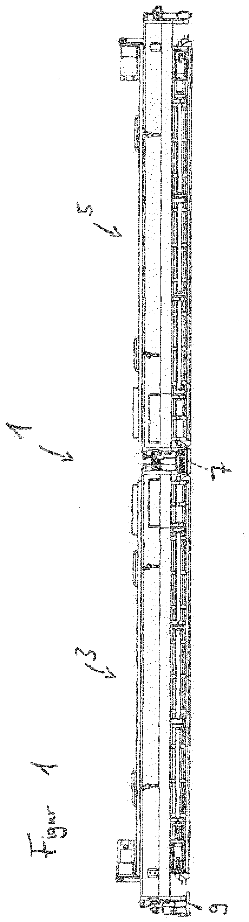

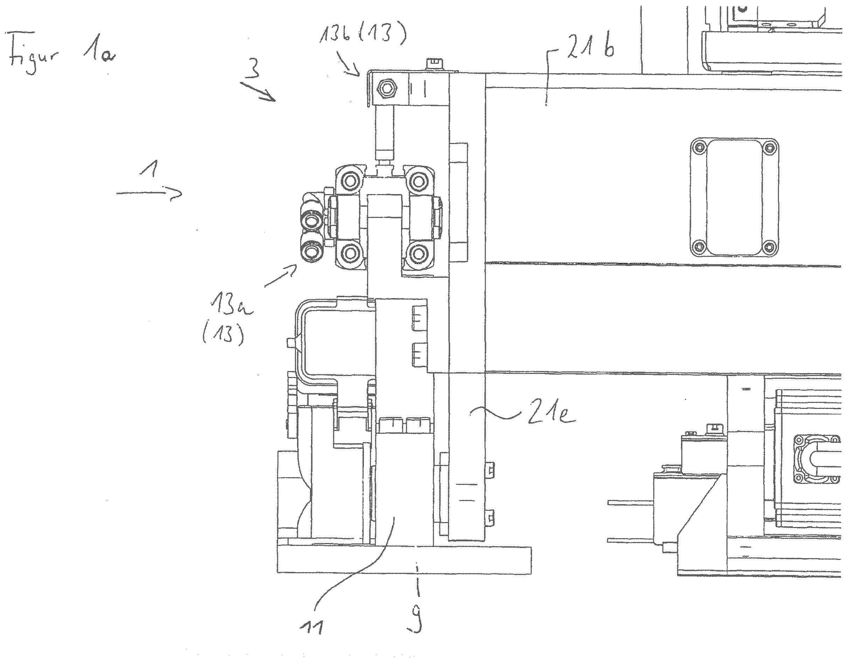

**Figur 1** zeigt eine Seitenansicht einer Beschichteranordnung 1 gemäß einer ersten Ausführungsform der Erfindung.

Die Beschichteranordnung ist hier beispielgebend mit zwei Beschichtern 3, 5 ausgestaltet. Es versteht sich, dass die Beschichteranordnung 1 alternativ nur mit einem Beschichter 3 oder mit weiteren Beschichtern ausgestattet sein kann, wobei die unten beschriebenen Merkmale analog anwendbar sind, d.h. nicht auf eine Beschichteranordnung mit zwei Beschichtern beschränkt sind.

Die hier gezeigte Beschichteranordnung 1 weist einen ersten Beschichter 3 und einen zweiten Beschichter 5 auf. Im Folgenden wird hauptsächlich der erste Beschichter 3 beschrieben, und die in diesem Zusammenhang genannten Merkmale sind analog anwendbar auf den zweiten Beschichter 5.

Der erste Beschichter 3 und der zweite Beschichter 5 können zum Beispiel über eine Basisplatte 7 fest miteinander verbunden sein, so dass sie gemeinsam über ein jeweiliges Baufeld hinweg verfahrbar sind. Im vorliegenden Fall ist jeder Beschichter an einer seiner Stirnseiten an der Basisplatte 7 befestigt, zum Beispiel abgestützt. Die Basisplatte 7 kann wiederum entlang einer (nicht gezeigten) Linearführungsstruktur verfahrbar sein, die sich in Figur 1 senkrecht zu der Zeichenebene erstrecken würde.

Ferner kann der erste Beschichter 3 mit seiner anderen Stirnseite zum Beispiel an einer weiteren Basisplatte 9 befestigt sein. Die Basisplatte 9 kann wiederum entlang einer weiteren (ebenfalls nicht gezeigten) Linearführungsstruktur verfahrbar sein. Auch der zweite Beschichter 5 kann an seiner anderen Stirnseite an einer weiteren (nicht gezeigten) Basisplatte befestigt sein.

Wie in Figur 1 gezeigt, können die beiden Beschichter 3 und 5 zum Beispiel jeweils langgestreckt ausgebildet sein, wobei sich die jeweilige Längsachse senkrecht zur Bewegungsrichtung erstreckt. Ferner können die beiden Beschichter 3 und 5 in Längsrichtung hintereinander angeordnet sein.

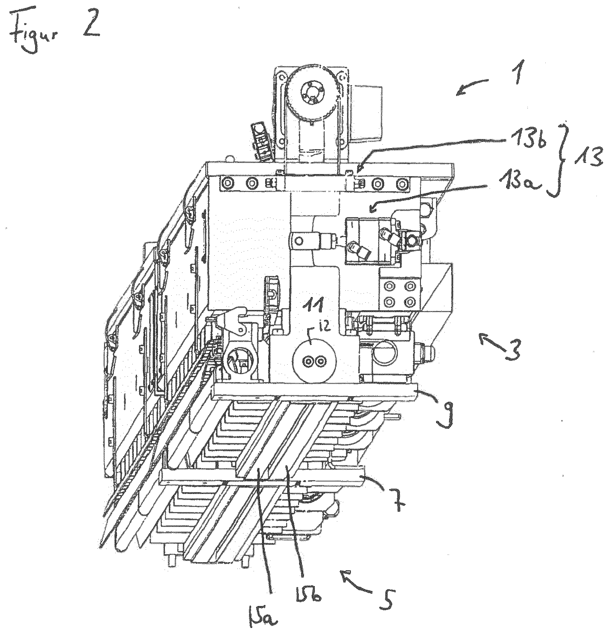

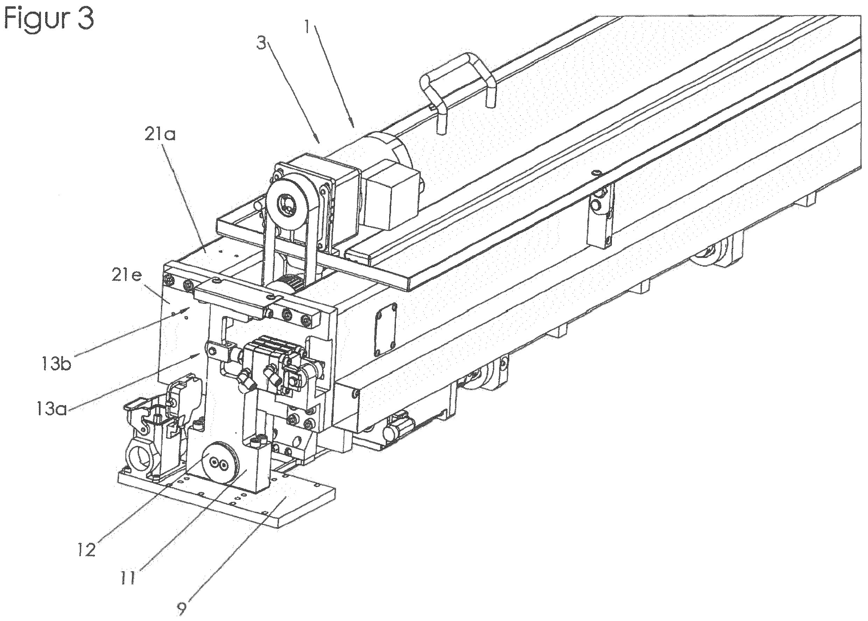

Die **Figuren 2** **und** **3** zeigen jeweils eine Perspektivansicht auf eine Stirnseite der Beschichteranordnung aus Figur 1.

Wie in den Figuren 2 und 3 gezeigt, kann der erste Beschichter 3 zum Beispiel an seiner freien, dem zweiten Beschichter 5 abgewandten Stirnseite über einen Lagerbock 11 an der Basisplatte 9 befestigt sein. Analog kann der Beschichter 3 zum Beispiel über einen weiteren Lagerbock an der Basisplatte 7 befestigt sein.

Der Beschichter 3 kann zum Beispiel schwenkbar an dem jeweiligen Lagerbock 11 gelagert sein, zum Beispiel mittels eines Schwenkzapfens 12. Dies ermöglicht ein Schwenken des Beschichters 3 um eine horizontale Schwenkachse, die parallel verläuft zu der Längsachse des Beschichters 3, um mittels einer Schwenkvorrichtung 13 einen Neigungswinkel von ein oder mehreren, an dem Beschichter 3 angebrachten Streichelementen 15a und 15b einzustellen.

Die Schwenkvorrichtung 13 ist hier beispielgebend mit einem Hydraulikantrieb 13a, der zwischen Lagerbock 11 und Beschichter 3 angeordnet ist, und einem elektronisch verstellbaren Anschlagsystem 13b ausgeführt, das den Schwenkwinkel des Beschichters nach rechts und links variabel begrenzt. Siehe auch Figur **1a****.** Der Beschichter 3 kann dabei zum Beispiel für eine erste Fahrt ("Hinfahrt") in eine erste Richtung und für eine zweite Fahrt ("Rückfahrt") in eine zweite Richtung geschwenkt werden.

Die Streichelemente 15a und 15b sind hier beispielgebend als Sfreichleisten ausgebildet und können zum Beispiel aus Stahl gefertigt sein. Die Streichelemente 15a und 15b können auch als Klingen bezeichnet werden.

Wie in Figur 2 gezeigt, bilden die Streichelemente 15a und 15b zum Beispiel eine nach unten gerichtete Streichfläche aus, die im Wesentlichen eben ausgebildet ist. Durch Einstellen des Neigungswinkels der jeweiligen Streichfläche der Streichelemente 15a und 15b kann ein gewünschter Verdichtungsgrad des Partikelmaterials eingestellt werden. Der vorliegende Beschichter 3 ist dabei beispielgebend als bidirektionaler Beschichter ausgebildet, der in beiden Richtungen, während einer Hin- und während einer Rückfahrt, beschichten und das ausgegebene Partikelmaterial zweckmäßig verdichten kann.

Es versteht sich, dass die beschriebene Beschichteranordnung auch als unidirektionale Beschichteranordnung ausgestaltet sein kann, in welchem Fall eine der Klingen eingespart werden kann.

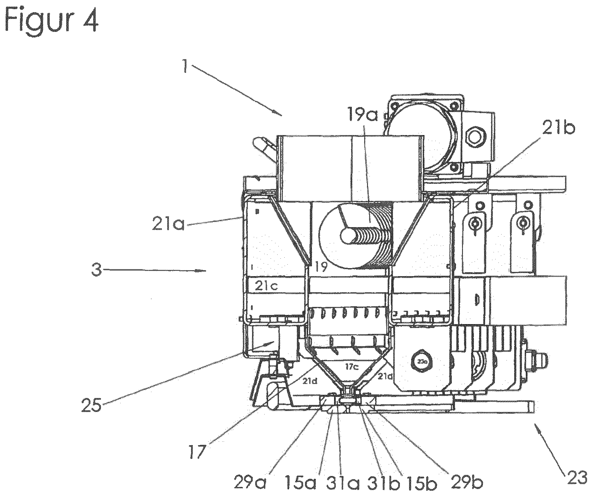

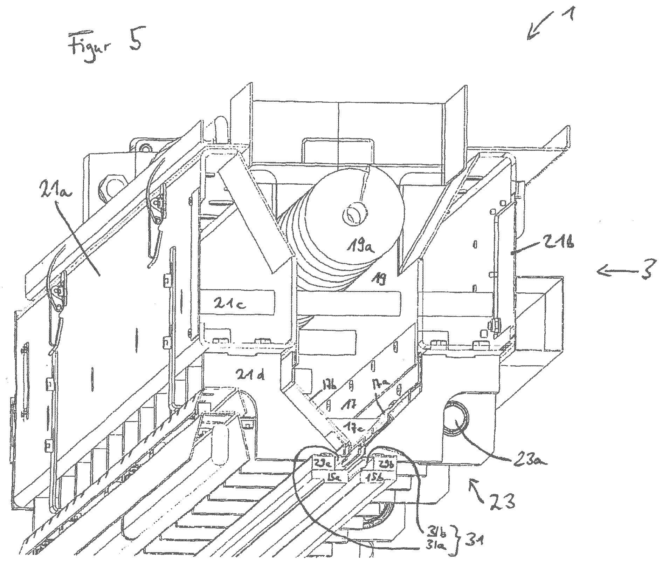

Wie aus den **Figuren 4 bis 7** ersichtlich, kann der Beschichter 3 zum Beispiel einen ersten, unteren Behälter 17, einen (optionalen) zweiten, oberen Behälter 19 und eine Trägerstruktur aufweisen.

Die Trägerstruktur kann zum Beispiel einen oder mehrere quer zur Bewegungsrichtung bzw. in Beschichter-Längsrichtung verlaufende Träger 21a, 21b aufweisen, die zum Beispiel entlang der Beschichter-Längsrichtung mit mehreren Rohren oder Stäben 21 c in Querrichtung verbunden sein können. Wie aus Figur 3 ersichtlich, können die Träger 21a, 21 b zum Beispiel an zumindest einer ihrer Stirnseiten mit einer Verbindungsplatte 21e verbunden sein.

Der erste und der zweite Behälter 17, 19 können zum Beispiel jeweils eine langgestreckte Form haben.

Der erste Behälter 17 hat hier beispielgebend eine sich im Querschnitt nach unten hin verjüngende Form, zum Beispiel Trichterform. An seinem unteren Ende hat der erste Behälter 17 einen Längsschlitz (ohne Bezugszeichen). An seinem oberen Ende kann der erste Behälter 17 zum Beispiel offen sein und mit einem unteren, offenen Ende des optionalen zweiten Behälters 19 in Verbindung stehen. Zum Beispiel kann der erste Behälter 17 entlang der Längsrichtung mit ein oder mehreren Versteifungselementen 17c versteift sein.

Der erste Behälter 17 ist beispielgebend als Rüttelbehälter ausgeführt, dessen eine Seitenwand 17a (hier die rechte Seitenwand) von einer Rüttelvorrichtung 23 mit einer Rüttelbewegung beaufschlagbar ist, um in dem Behälter 17 aufgenommenes partikelförmiges Baumaterial in Vibration zu versetzen.

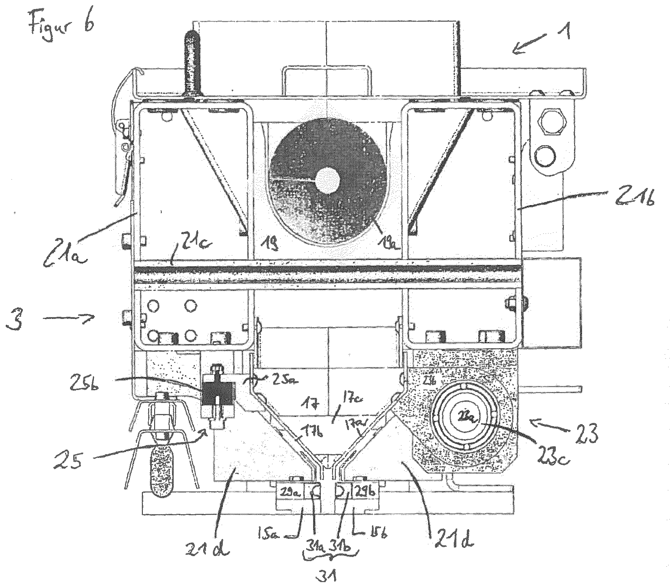

Der erste Behälter 17 ist hier beispielgebend auf einer Seite (hier an der rechten Seitenwand 17a) über die Rüttelvorrichtung 23 mit der Trägerstruktur 21 b verbunden und auf der anderen Seite (hier an der linken Seitenwand 17b) über eine Dämpfungsvorrichtung 25 mit der Trägerstruktur 21a verbunden. Siehe zum Beispiel Figur 6.

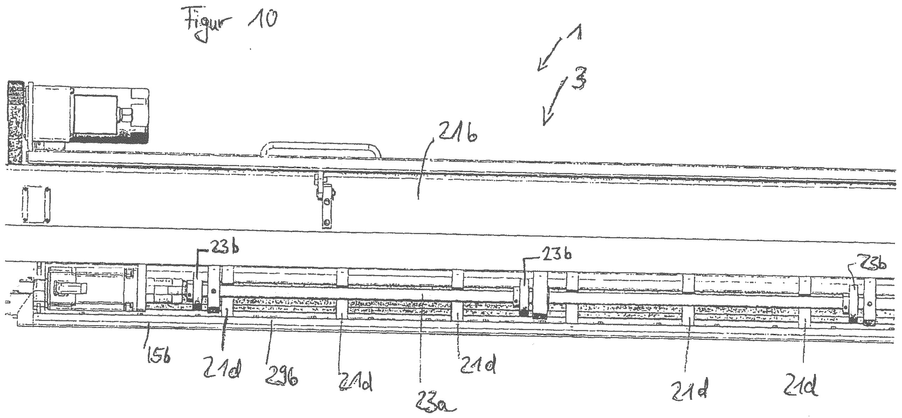

Wie gezeigt, kann die Rüttelvorrichtung 23 zum Beispiel eine Welle 23a aufweisen, die über einen Exzenter 23c mit einem Pleuel 23b verbunden ist, der mit der einen Seite des ersten Behälters 17 verbunden ist. Es können in Beschichter-Längsrichtung zum Beispiel mehrere Pleuel 23b und/oder Exzenter 23c hintereinander vorgesehen sein. Siehe zum Beispiel **Figur 10****.**

Die Dämpfungsvorrichtung 25 kann zum Beispiel ein Dämpfungselement 25b, das an der Trägerstruktur 21a befestigt ist, sowie einen Vorsprungabschnitt 25a aufweisen, der mit der anderen Seite des ersten Behälters 17 verbunden oder von diesem gebildet ist und sich auf dem Dämpfungselement 25b abstützt. Es können zum Beispiel in Beschichter-Längsrichtung mehrere Dämpfungsvorrichtungen 25 hintereinander vorgesehen sein, d.h. der erste Behälter kann entlang der Beschichter-Längsrichtung an mehreren Stellen mit der Trägerstruktur verbunden sein.

Der (optionale) zweite Behälter 19 kann beispielgebend eine im Querschnitt rechteckige Form haben. Der zweite Behälter dient hier als sogenannter Vorlagebehälter, der den ersten Behälter mit Baumaterial versorgt. In dem zweiten Behälter kann zum Beispiel ein Verteilerelement 19a, hier eine Verteilerschnecke, aufgenommen sein. Der zweite Behälter 19 kann starr mit der Trägerstruktur verbunden sein und/oder von dieser gebildet/begrenzt sein.

In dem gezeigten Ausführungsbeispiel sind der erste Behälter 17 und der zweite Behälter 19 voneinander rüttelbewegungsentkoppelt.

Wie ferner aus den Figuren 4 bis 7 ersichtlich (siehe auch Figur 10), kann die Trägerstruktur zum Beispiel entlang der Beschichter-Längsrichtung auf beiden Seiten des Behälters 17 ein oder mehrere Rippen 21d aufweisen, die im Wesentlichen starr mit den Trägern 21 a bzw. 21 b verbunden sind und an denen die Streichelemente 15a und 15b von dem ersten Behälter 17 rüttelbewegungsentkoppelt befestigt sind, zum Beispiel im Wesentlichen starr, zum Beispiel unter Verwendung einer jeweiligen Leiste 29a bzw. 29b, die zum Beispiel über ein jeweiliges Zwischenteil (ohne Bezugszeichen) an der Rippe befestigt ist.

Oberhalb des ersten Streichelements 15a und unterhalb des Längsschlitzes, also zwischen erstem Streichelement 15a und erstem Behälter 17 kann zum Beispiel ein optionales erstes Schließelement 31 a angeordnet sein. Dieses ist beispielgebend nach unten hin von einer Oberseite des ersten Streichelements 15a umgeben, und wird zudem auf einer lateralen Seite von der Leiste 29a und nach oben hin von dem Zwischenteil (ohne Bezugszeichen) umgeben. In einer Richtung senkrecht zu der Längsrichtung des Beschichters 3 und senkrecht zu einer imaginären, vertikalen Ebene durch den Längsschlitz liegt das erste Schließelement 31a frei.

Analog kann oberhalb des zweiten Streichelements 15b und unterhalb des Längsschlitzes, also zwischen zweitem Streichelement 15b und erstem Behälter 17 ein optionales zweites Schließelement 31b angeordnet sein. Dieses ist beispielgebend nach unten hin von einer Oberseite des zweiten Streichelements 15b umgeben, und wird auf einer lateralen Seite von der Leiste 29b und nach oben hin von dem Zwischenteil (ohne Bezugszeichen) umgeben. In einer Richtung senkrecht zu der Längsrichtung des Beschichters 3 und senkrecht zu der imaginären, vertikalen Ebene durch den Längsschlitz liegt das zweite Schließelement 31b frei.

Das jeweilige Schließelement 31 a, 31 b kann zum Beispiel mit dem zugehörigen Streichelement und/oder der zugehörigen Leiste und/oder dem zugehörigen Zwischenteil fest verbunden sein, zum Beispiel durch Kleben.

Die beiden Schließelemente 31a und 39b, welche zum Beispiel langgestreckt ausgebildet sind, bilden zusammen eine optionale Schließvorrichtung 31 aus, die eingerichtet ist, um die Öffnung des Behälters 17 zum Ausgeben des partikelförmigen Baumaterials selektiv zu verschließen. In den Figuren 4 bis 7 sind die Schließelemente 31a und 31b dabei in ihrem jeweiligen geöffneten Zustand gezeigt.

Die Schließelemente 31a und 31b können die Öffnung in ihrem jeweiligen Schließzustand selektiv teilweise verdecken (zum Beispiel in Folge einer seitlichen Ausdehnung des jeweiligen Schließelements), so dass die Schließelemente 31 a und 31b die Öffnung gemeinsam verschließen.

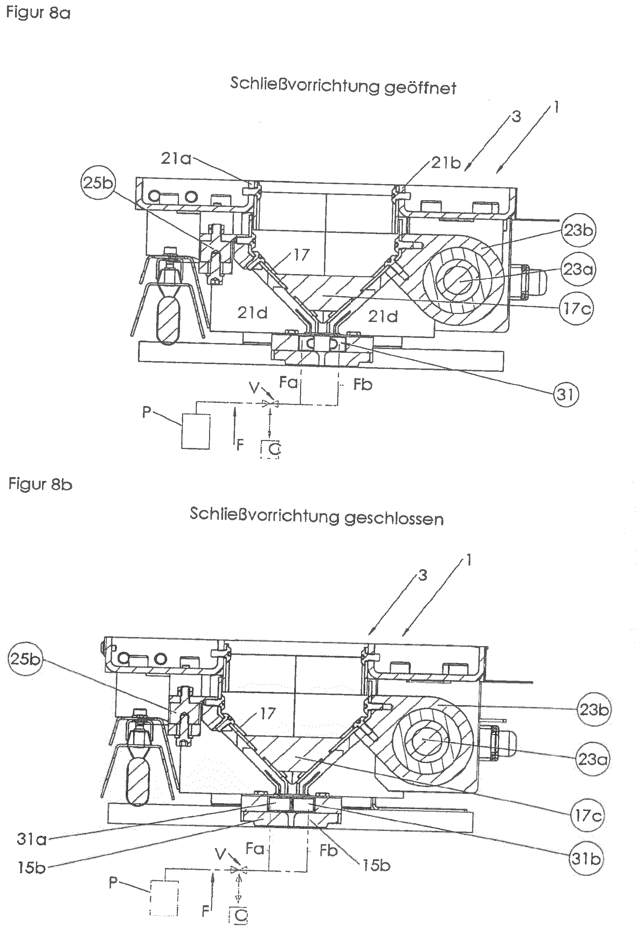

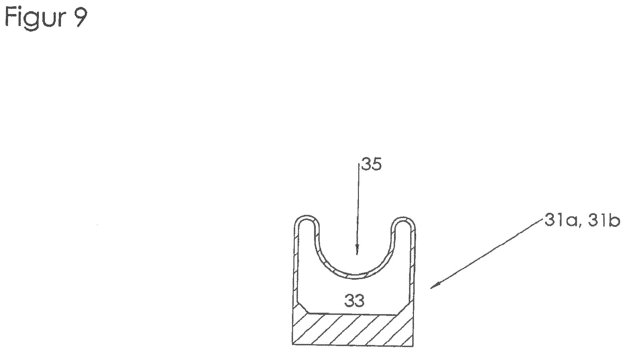

Wie aus den **Figuren 8a, 8b** **und** **9** ersichtlich, können das erste Schließelement 31a und das zweite Schließelement 31 b zum Beispiel einen ersten bzw. einen zweiten Hohlkörper aufweisen, wobei jeder der beiden Hohlkörper einen inneren Hohlraum 33 hat (siehe Figur 9), der von einem verformbaren Abschnitt 35 begrenzt ist, wobei die beiden Hohlkörper derart auf einander gegenüberliegenden Seiten der Öffnung angeordnet sind (siehe Figur 8a), dass die verformbaren Abschnitte einander zugewandt sind, und wobei jeder der beiden Hohlkörper eingerichtet ist, um von einem zugeführten Druckfluid unter einer Expansion des inneren Hohlraums an dem verformbaren Abschnitt nach außen hin verformt zu werden, so dass die beiden verformbaren Abschnitte aufeinander zu bewegbar und miteinander in Kontakt bringbar sind, um hierdurch die Öffnung zu verschließen (siehe Figur 8b). Wie aus Figur 8b ersichtlich, verdeckt dabei jedes der beiden Schließelemente 31a, 31b teilweise die Öffnung. Das mindestens eine Schließelement 31 a, 31 b oder zumindest der verformbare Abschnitt davon ist hier beispielgebend aus einem nachgiebigen, elastischen Silikonmaterial gefertigt und weist eine Dichtfläche auf, die eingerichtet ist, um in einem Schließzustand der Schließvorrichtung an einer Gegenfläche abzudichten. Die Dichtfläche ist dabei an dem verformbaren Abschnitt ausgebildet. Gemäß der gezeigten Ausführungsform ist die Gegenfläche ebenfalls von einem verformbaren Abschnitt gebildet.

Wie aus den Figuren 8a, 8b und 9 ersichtlich, kann der verformbare Abschnitt 35 zum Beispiel bei freigegebener Öffnung einwärts gewölbt sein und zum Schließen der Öffnung von einem dem Hohlkörper zugeführten Druckfluid nach außen wölbbar sein.

Wie in den Figuren 8a und 8b angedeutet, kann die Schließvorrichtung 31 zum Beispiel ferner eine Fluidleitungsstruktur F aufweisen (gestrichelte Line), über die das jeweilige Schließelement 31a, 31b mit einer Druckfluidquelle in Fluidverbindung steht.

Die Fluidleitungsstruktur F kann zum Beispiel zumindest abschnittsweise als Schlauchleitungsstruktur ausgebildet sein, zum Beispiel als Schleppschlauchleitungsstruktur. Die Schlauchleitungsstruktur kann eine erste und eine zweite Schlauchleitung Fa bzw. Fb aufweisen, wobei die jeweilige Schlauchleitung zum Beispiel an einer Stirnseite des zugehörigen Schließelements 31a, 31b an dasselbe angeschlossen sein kann.

Die Druckfluidquelle weist hier beispielgebend einen Druckluftbehälter P, der hier beispielgebend als ortsfester Behälter ausgebildet ist, sowie ein Ventil V auf, das zum Beispiel zwischen dem Druckluftbehälter P und den Schließelementen an der Fluidleitung F montiert sein kann.

Wie in den Figuren 8a und 8b ferner angedeutet, kann die Schließvorrichtung 31 zum Beispiel ferner eine Steuereinheit C aufweisen, die eingerichtet ist, um die Öffnung mittels des mindestens einen Schließelements 31a, 31b gesteuert selektiv zu schließen.

Dabei steht die Steuereinheit hier beispielgebend mit dem Ventil V in Verbindung und ist eingerichtet, um dieses für ein Schließen der Öffnung derart anzusteuern, dass die Druckfluidquelle Druckfluid in den mindestens einen Hohlkörper 31a einspeist, so dass dieser an seinem verformbaren Abschnitt 35 verformt wird, um hierdurch die Öffnung zu verschließen.

In Figur 8a ist das Ventil dabei geschlossen (und folglich die Schließvorrichtung geöffnet), wohingegen in Figur 8b das Ventil geöffnet ist (und folglich die Schließvorrichtung geschlossen ist).

Die Steuereinheit C kann zum Beispiel eingerichtet sein, um
die Schließvorrichtung 31 zu schließen, wenn der dem Beschichter 3 zugeteilte Baujob beendet und/oder unterbrochen ist, und/oder
während einer beschichtungsfreien Fahrt und/oder während einem beschichtungsfreien Fahrtabschnitt, zum Beispiel Vorlauf- und/oder Nachlauffahrtabschnitt, die Schließvorrichtung 31 des Beschichters 3 zumindest zeitweise zu schließen und/oder
in einer Ruheposition des Beschichters 3 die Schließvorrichtung 31 des Beschichters zu schließen und/oder die Schließvorrichtung 31 des Beschichters 3 für eine Reinigung des Beschichters zumindest zeitweise zu schließen.

Die verformbaren Abschnitte können zum Beispiel von dem oben beschriebenen, seitlichen, freien Abschnitt des jeweiligen Schließelements gebildet sein.

Ein derart ausgebildetes Schließelement kann gemäß verschiedenen Ausführungsformen zum Beispiel auch als aufblasbares Dichtelement bezeichnet werden.

Es versteht sich, dass in einer beispielgebenden Abwandlung der gezeigten Ausführungsform anstelle der zwei Schließelemente 31a und 31b zum Beispiel nur ein Schließelement 31 a vorgesehen sein kann, das in dem geschlossenen Zustand der Schließvorrichtung die Öffnung vollständig verdeckt. Ferner alternativ könnte die Schließvorrichtung zum Beispiel ein oder mehrere Schieber aufweisen.

Es sei noch angemerkt, dass die in Figur 1 gezeigte Beschichteranordnung für jeden der Beschichter 3 und 5 eine separate Schließvorrichtung aufweisen kann, so dass die Öffnung eines jeweiligen Beschichters unabhängig und selektiv verschließbar ist.

Ferner kann in dem Fall, dass der Beschichter 3 zusammen mit dem Beschichter 5 vorgesehen ist, derjenige Beschichter, dessen Baujob zuerst beendet ist, mittels seiner zugehörigen Schließvorrichtung geschlossen werden, zum Beispiel mindestens solange bis der Baujob des anderen Beschichters erledigt ist.

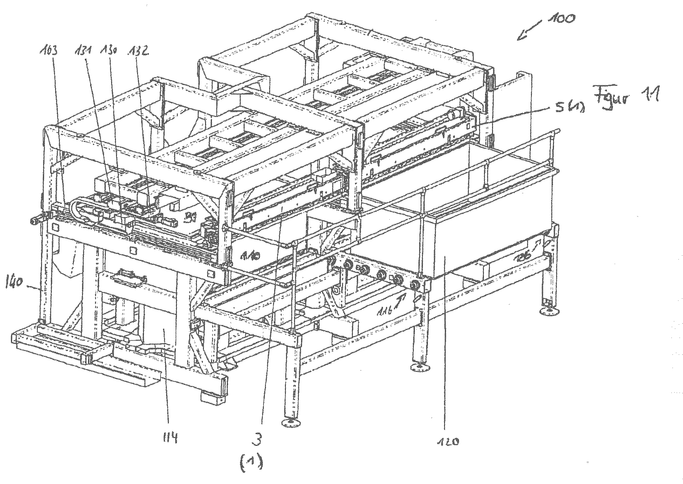

**Figur 11** zeigt einen 3D-Drucker 100 gemäß einer Ausführungsform der Erfindung, wobei das Anlagengehäuse weggelassen ist, so dass der Anlagenrahmen 140 zu erkennen ist.

Wie in Figur 11 gezeigt, kann die oben beschriebene Beschichteranordnung 1 zum Beispiel in einem 3D-Drucker 100 eingesetzt werden. Das Bezugszeichen 103 zeigt in diesem Zusammenhang eine Linearführungsstruktur für den mindestens einen Beschichter 3.

Der 3D-Drucker 100 kann zum Beispiel neben der Beschichteranordnung 1 (hier beispielgebend aufweisend einen ersten und einen zweiten Beschichter 3, 5) eine Druckvorrichtung mit einem Druckkopf 130 aufweisen, der eingerichtet ist, um einen vorbestimmten Teilbereich einer zuvor aufgebrachten Schicht aus Baumaterial mit Behandlungsmittel zu bedrucken.

Der Druckkopf 130 kann zum Beispiel horizontal verfahrbar sein, zum Beispiel in einer Richtung senkrecht zu der Richtung, in der der mindestens eine Beschichter 3, 5 verfahrbar ist, zum Beispiel entlang einer ersten Druckkopf-Linearführungsführungsstruktur 131.

Der Druckkopf 130 kann dabei zum Beispiel eingerichtet sein, um mehrere Baufelder (hier zwei) zu bedienen.

Der Druckkopf 130 kann zum Beispiel zusätzlich in der Richtung verfahrbar sein, in der auch der mindestens eine Beschichter 3, 5 verfahrbar ist, so dass er das oder die Baufelder insgesamt mäanderförmig abfahren kann, zum Beispiel in einer U-Form. Hierzu kann der Druckkopf 130 zum Beispiel entlang einer zweiten Drucckopf-Linearführungsstruktur 132 verfahrbar sein.

Alternativ zu der Druckvorrichtung kann eine jeweilige Baumaterialschicht zum Beispiel mit einem Laser selektiv verfestigt, zum Beispiel gesintert, werden (sogenanntes "selektives Lasersintern").

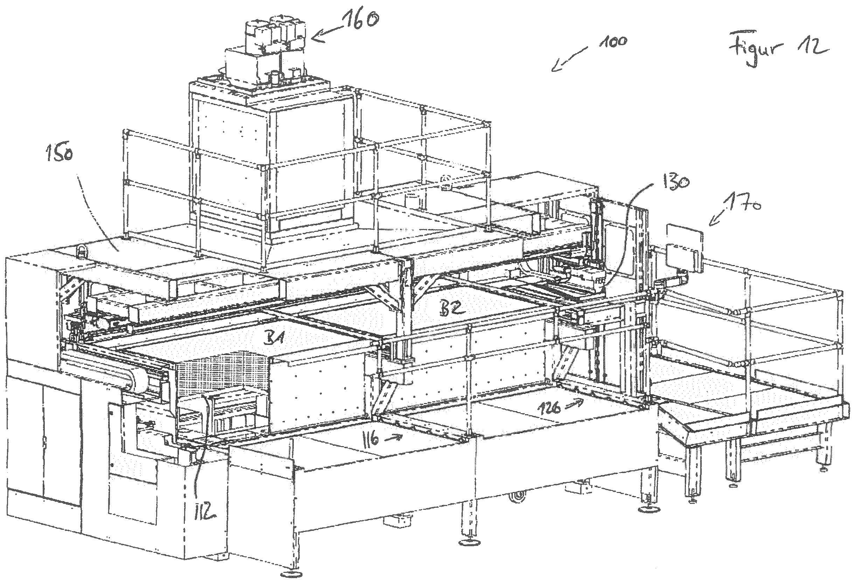

Wie in Figur 11 gezeigt (siehe auch Figur 12), kann der 3D-Drucker 100 zum Beispiel ein oder mehrere Baubereiche B1 und B2 aufweisen (hier beispielgebend zwei), die zum Beispiel von einer jeweiligen Bauplattform 112 (siehe Figur 12) und/oder einer jeweiligen Baubox 110 bzw. 120 definiert werden, wenn diese sich in ihrer Bauposition innerhalb des 3D-Druckers befindet.

Die jeweilige Bauplattform 112 kann zum Beispiel mit einem zugehörigen Hubantrieb (hier beispielgebend mit einem anlagenfesten Hubantrieb 114) höhenverstellbar sein.

Die erste Baubox 110 kann wie gezeigt zum Beispiel über eine erste Rollenbahn 116 in den 3D-Drucker hinein und aus diesem heraus verfahrbar sein, und die zweite Baubox 120 kann zum Beispiel über eine zweite Rollenbahn 126 in den 3D-Drucker hinein und aus diesem heraus verfahrbar sein.

**Figur 12** zeigt den 3D-Drucker 100 aus Figur 11, diesmal mit einem Großteil des Anlagengehäuses 150 sowie mit einer integrierten Beschichter-Beschickungseinheit 160.

Wie in Figur 12 gezeigt, kann der 3D-Drucker 100 zum Beispiel ferner eine in den 3D-Drucker integrierte Beschichter-Beschickungseinheit 160 aufweisen, mit der Baumaterial frisch zubereitbar und in den (jeweiligen) Beschichter zuführbar ist.

Zu erkennen sind zwei Vorratsbehälter, die ein jeweiliges Partikelmaterial speichern und dieses in einen nicht sichtbaren Mischbehälter mit Rührwerk dosiert einspeisen können.

Ein Teil des Anlagengehäuses 150 und der ersten Baubox 100 ist in Figur 12 freigeschnitten, um die Bauplattform 112 und den auf dieser angeordneten Stapel aus Baumaterialschichten sichtbar zu machen.

Die Beschichter 3, 5 sind in Figur 12 nach hinten verfahren, und der Druckkopf 130 befindet sich rechts vorne.

In Figur 12 ist zudem gut zu erkennen, wie von der ersten Baubox und der zweiten Baubox in dem 3D-Drucker ein erster Baubereich B1 bzw. ein zweiter Baubereich B2 gebildet werden.

Das Bezugszeichen 170 bezeichnet eine gemeinsame Bedienstation.

Die Bezugszeichen 116 und 126 bezeichnen eine jeweilige Zuführvorrichtung, hier beispielgebend in der Form einer Rollenbahn, mit der eine jeweilige Baubox in ihre Baubox-Bauposition innerhalb des 3D-Druckers verfahrbar ist.

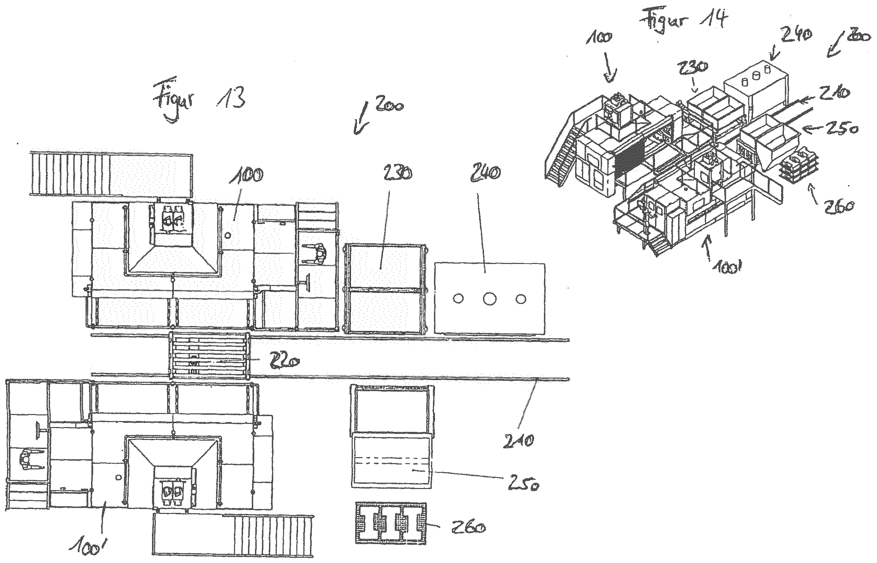

Die **Figuren 13 und 14** zeigen in einer Draufsicht bzw. Perspektivansicht von oben eine 3D-Druckeranordnung 200, welche einen ersten und einen zweiten 3D-Drucker 100 bzw. 100' aufweist.

Die beiden 3D-Drucker können zum Beispiel wie der mit Bezug auf die Figuren 11 und 12 beschriebene 3D-Drucker 100 ausgebildet sein.

Wie in den Figuren 13 und 14 gezeigt, können der erste und der zweite 3D-Drucker 100, 100' benachbart zueinander angeordnet sein, derart, dass sich die Einführöffnungen zum Einführen der Bauboxen gegenüber liegen. Zwischen den beiden 3D-Druckern kann sich zum Beispiel ein Schienensystem 210 erstrecken, entlang welchem eine gemeinsame Transportvorrichtung 220 verfahrbar ist. Die Transportvorrichtung 220 kann von sowohl dem ersten als auch dem zweiten 3D-Drucker 100, 100' genutzt werden, um den jeweiligen 3D-Drucker mit ein oder mehreren Bauboxen zu bestücken.

Ferner können entlang des Schienensystems ein oder mehrere optionale Komponenten angeordnet sein, zum Beispiel ein Baubox-Vorrat 230, in dem ein oder mehrere Bauboxen vorgehalten werden, und/oder ein Mikrowellen-Ofen 240, der eine Baubox aufnehmen kann, um ein darin enthaltenes Bauteil (weiter) auszuhärten, und/oder eine Entpackstation 250, wo ein in der Baubox enthaltenes Bauteil von losem, nicht verfestigtem Partikelmaterial befreit und somit "ausgepackt" werden kann, zum Beispiel automatisiert. Das Bezugszeichen 260 bezeichnet dabei einen optionalen Bauteil-Vorrat, in den ausgepackte Bauteile (hier beispielgebend Gussformen und/oder Gießkerne), die mittels eines generativen Herstellungsverfahrens unter Verwendung eines der beiden 3D-Drucker hergestellt wurden, eingelagert werden können.

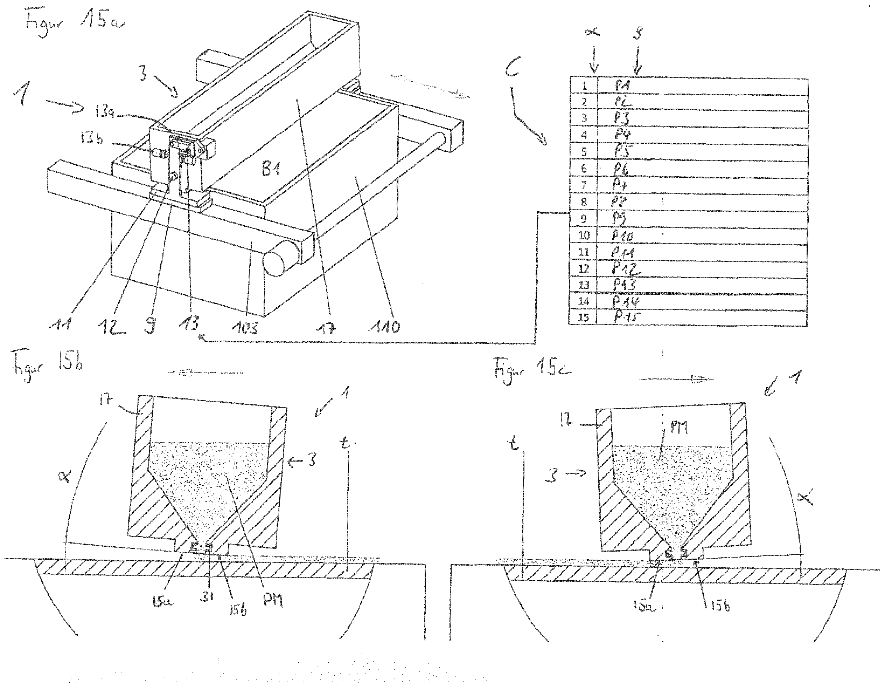

Die Figuren **15a bis 15c** zeigen verschiedene Ansichten einer Beschichteranordnung 1 für einen 3D-Drucker gemäß einer weiteren Ausführungsform.

Wie gezeigt, kann die Beschichteranordnung 1 aufweisen:
einen Beschichter 3 mit einem Behälter 17, der einen inneren Hohlraum zur Aufnahme von partikelförmigem Baumaterial PM definiert, der in einer Öffnung zum Ausgeben des partikelförmigen Baumaterials mündet, und mindestens einem (hier beispielgebend zwei) Streichelement 15a, 15b, von dem eine nach unten ausgerichtete Streichfläche ausgebildet ist und das eingerichtet ist, um aus der Öffnung ausgegebenes Baumaterial mit der Streichfläche zu überstreichen, um dadurch das ausgegebene Partikelmaterial zu nivellieren und/oder zu verdichten, und
eine Einstellvorrichtung 13, die eingerichtet ist, um einen Neigungswinkel α der (jeweiligen) Streichfläche variabel einzustellen.

Es versteht sich, dass die Beschichteranordnung 1, die hier beispielgebend als bidirektionale Beschichteranordnung ausgebildet ist, alternativ zum Beispiel als unidirektionale Beschichteranordnung ausgebildet werden kann.

Wie gezeigt, kann die Einstellvorrichtung 13 zum Beispiel einen Antrieb 13a aufweisen, mit dem der Neigungswinkel α der (jeweiligen) Streichfläche veränderbar ist. Hier ist der Antrieb beispielgebend als hydraulischer Linearantrieb ausgeführt. Es versteht sich, dass auch ein alternativer Antrieb verwendbar ist.

Wie gezeigt, kann die Einstellvorrichtung 13 ferner zum Beispiel eine Anschlagstruktur mit mindestens einem Anschlag 13b aufweisen, der eingerichtet ist, um eine von dem Antrieb 13a erzeugte Bewegung (hier beispielgebend Beschichter-Schwenkbewegung) auf ein bestimmtes Ausmaß zu begrenzen, um hierdurch den Neigungswinkel α der (jeweiligen) Streichfläche einzustellen. Der Anschlag 13b kann variabel eingestellt, so dass durch ein Verstellen des Anschlags der Neigungswinkel α der Streichfläche variabel einstellbar ist. Der Anschlag 13b kann zum Beispiel elektrisch verstellbar sein. Es versteht sich, dass alternativ zum Beispiel der Antrieb 13a eingerichtet sein kann, um den Neigungswinkel α der (jeweiligen) Streichfläche unmittelbar über den Antrieb selbst variabel einzustellen.

Gemäß der gezeigten Ausführungsform ist die Einstellvorrichtung 13 als Schwenkvorrichtung ausgebildet, die eingerichtet ist, um den Beschichter 3 zu schwenken, um dadurch das (jeweilige) Streichelement 15a zu schwenken und hierdurch den Neigungswinkel α der Streichfläche einzustellen.

Wie aus den Figuren 15b und 15c ersichtlich, ist der Beschichter 3 gemäß der vorliegenden Ausführungsform also als schwenkbarer Beschichter ausgebildet. Wie in Figur 15a gezeigt, kann die Beschichteranordnung 1 hierzu zum Beispiel ferner mindestens einen Lagerbock 11 aufweisen, an dem der Beschichter 3 schwenkbar abgestützt ist, zum Beispiel mittels eines Schwenkzapfens 12. Wie ferner in Figur 15a gezeigt, kann die Beschichteranordnung 1 ferner zum Beispiel mindestens eine Linearführungsstruktur 103 aufweisen, entlang welcher der Beschichter 3 zusammen mit dem Lagerbock 11 entlang des Doppelpfeils verfahrbar ist. Wie ferner in Figur 15a gezeigt, kann die Beschichteranordnung 1 zum Beispiel über einen Bauraum B1 hinweg verfahrbar sein, der hier beispielgebend von einer Baubox 110 definiert wird.

Es versteht sich, dass der Bauraum alternativ zum Beispiel (allein) von einer Bauplattform über dieser definiert sein kann.

Wie in Figur 15b gezeigt, kann die Beschichteranordnung 1 zum Beispiel eine optionale Schließvorrichtung 31 aufweisen zum selektiven, gesteuerten Schließen der Öffnung.

Wie ferner in Figur 15b gezeigt, kann das mindestens eine Streichelement 15a, 15b zum Beispiel von dem Behälter mitausgebildet sein, zum Beispiel von einem nach unten hin vorspringenden Abschnitt desselben, der sich unterhalb der Öffnung erstreckt. Es versteht sich, dass das mindestens eine Streichelement 15a, 15b alternativ von einem separaten Element ausgebildet sein kann.

Wie ferner aus Figur 15a ersichtlich, kann die Beschichteranordnung 1 zum Beispiel ferner eine Steuereinheit C aufweisen, die mit der Einstellvorrichtung 13, zum Beispiel mit dem Antrieb 13a und/oder dem Anschlag 13b, in Verbindung steht.

Die Steuereinheit ist eingerichtet, um die Einstellvorrichtung 13 derart anzusteuern, dass diese für ein Nivellieren und/oder Verdichten des ausgegebenen Baumaterials den (jeweiligen Neigungswinkel α einstellt/verstellt, zum Beispiel auf einen (jeweiligen) anfänglichen Wert einstellt und/oder nachstellt, zum Beispiel während eines Baujobs.

Wie in Figur 15a angedeutet, können in der Steuereinheit C zum Beispiel mehrere unterschiedliche Parameter oder Parametersätze P1-P15 hinterlegt sein, wobei die hier gezeigten Parametersätze jeweils gekennzeichnet sind durch eine verwendete Partikelmaterial-Zusammensetzung und/oder ein oder mehrere Umgebungsbedingungen und/oder einen gewünschten Verdichtungsgrad. Zum Beispiel kann der Parametersatz P1 für eine erste Partikelmaterial-Zusammensetzung stehen, mit der bei bestimmten Umgebungsbedingungen Schichten mit einem ersten gewünschten Verdichtungsgrad (zum Beispiel "hoher" Verdichtungsgrad) aufgebracht werden sollen. Zum Beispiel kann der Parametersatz P2 für die erste Partikelmaterial-Zusammensetzung stehen, mit der bei bestimmten Umgebungsbedingungen Schichten mit einem zweiten gewünschten Verdichtungsgrad (zum Beispiel "niedriger" Verdichtungsgrad) aufgebracht werden sollen. Zum Beispiel kann der Parametersatz P3 für eine zweite Partikelmaterial-Zusammensetzung stehen, mit der bei bestimmten Umgebungsbedingungen Schichten mit einem ersten gewünschten Verdichtungsgrad aufgebracht werden sollen etc. Ein Benutzer kann zum Beispiel an einer Bedienstation für die Partikelmaterial-Zusammensetzung und/oder die ein oder mehreren Umgebungsbedingungen und/oder den gewünschten Verdichtungsgrad einen jeweiligen Wert angeben bzw. eine entsprechende Auswahl treffen, woraufhin die Steuerung C einen zugehörigen Parameter oder Parametersatz auswählt. Die Steuereinheit C kann dann den (jeweiligen) Neigungswinkel α gemäß der verwendeten Partikelmaterial-Zusammensetzung und/oder den ein oder mehreren Umgebungsbedingungen und/oder dem gewünschten Verdichtungsgrad auf einen anfänglichen Wert einzustellen, basierend auf dem ausgewählten Parametersatz.

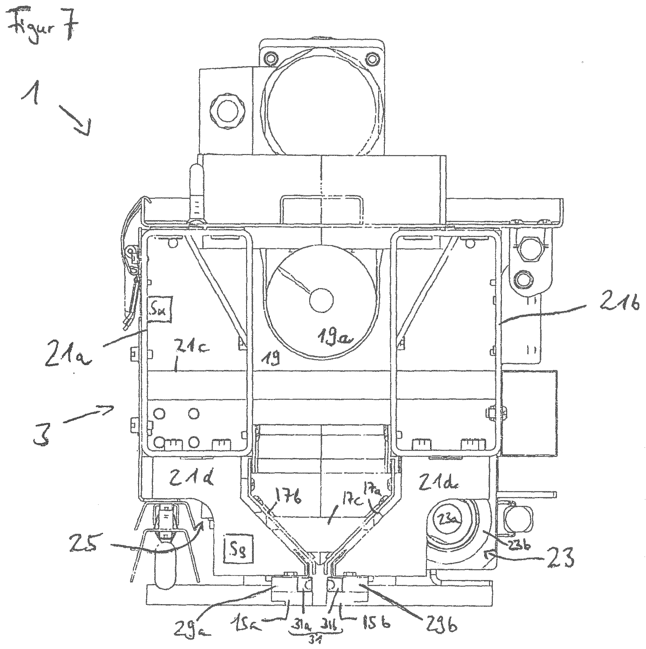

Wie ferner in Figur 15a angedeutet, kann der Steuereinheit C zum Beispiel optional ein momentaner/tatsächlicher Neigungswinkel α zugeführt werden, der von einem nicht-gezeigten Neigungssensor erfasst wird. Die Steuereinheit kann dabei ferner eingerichtet sein, um den Neigungswinkel α basierend auf dem von dem Neigungssensor erfassten Wert einzustellen, zum Beispiel zumindest anfänglich (zum Beispiel durch Steuern und/oder Regeln). Dadurch kann eine genaue Einstellung des Neigungswinkels erfolgen, und ein Einstellungsfehler, der zum Beispiel auf einen Verschleiß und/oder Temperaturschwankungen zurückzuführen ist, kann von der Steuerung erkannt werden. Der Neigungswinkelsensor kann zum Beispiel ein oder mehrere Beschleunigungssensoren aufweisen. In Figur 7 ist beispielgebend ein solcher Neigungswinkelsensor Sα an der Trägerstruktur angebracht. Es versteht sich, dass der Neigungswinkelsensor Sα aber auch anders ausgeführt sein kann und/oder an einem anderen Ort platziert werden kann, zum Beispiel an dem Streichelement selbst.

Wie ferner in Figur 15a angedeutet, kann der Steuereinheit C zum Beispiel optional ein momentaner Dichtewert ρ zugeführt werden (die Dichte bzw. den Verdichtungsgrad einer aufgebrachten Schicht betreffend), der von einem nicht-gezeigten Dichtesensor erfasst wird. Die Steuereinheit kann dabei ferner eingerichtet sein, um den Neigungswinkel α basierend auf dem von dem Dichtesensor erfassten Wert einzustellen, zum Beispiel nachzustellen (zum Beispiel durch Steuern und/oder Regeln). Dadurch kann zum Beispiel von der Steuerung vermieden oder zumindest erkannt werden, dass aufgrund einer Störgröße (zum Beispiel eine geänderte Körnung eines Baumaterial-Gemischs) ein veränderter Verdichtungsgrad vorliegt, so dass möglicherweise ein mangelhaftes Bauteil gefertigt wird. Die Steuerung kann daraufhin eine Warnung ausgeben und/oder den Baujob unterbrechen und/oder eine Dichteregelung oder Dichtesteuerung durchführen, zum Beispiel um durch Verändern des Neigungswinkels den (abweichenden) Dichtewert an einen Sollwert anzunähern. Der Dichtesensor kann zum Beispiel ein oder mehrere optische Sensoren aufweisen, die eine aufgebrachte Schicht in zumindest Teilbereichen davon optisch abtasten, um daraus Rückschlüsse auf den Verdichtungsgrad der Schicht zu ziehen. In Figur 7 ist beispielgebend ein solcher optischer Sensor Sρ an der Trägerstruktur des Beschichters angebracht. Es versteht sich, dass der Dichtesensor Sα aber auch anders ausgeführt sein kann und/oder an einem anderen Ort platziert werden kann, zum Beispiel an dem Streichelement oder an dem Lagerbock.

Der Dichtesensor und der Neigungswinkelsensor können zum Beispiel gemeinsam vorgesehen sein, oder es kann zum Beispiel nur einer der beiden Sensoren vorgesehen sein. In einer einfachen Ausgestaltung kann auch keiner der beiden Sensoren vorgesehen sein. In diesem Fall kann ein jeweiliger Parametersatz zum Beispiel lediglich einen Antriebsparameter aufweisen, zum Beispiel einen Drehwinkel eines Drehantriebs.

Es sei angemerkt, dass ein oder mehrere der Parametersätze auch eine bewusste Variation des Verdichtungsgrad während eines Baujobs verursachen können, um zum Beispiel ein Bauteil mit unterschiedlichen Festigkeitszonen zu fertigen.

Wie in den Figuren 15b und 15c gezeigt, kann der Beschichter 3 zum Beispiel als bidirektionaler Beschichter ausgebildet sein, der eingerichtet ist, um Baumaterial auf einer Hinfahrt und einer Rückfahrt des Beschichters auszugeben, wobei der Beschichter 3 auf jeder von zwei sich gegenüberliegenden Seiten der Öffnung ein Streichelement 15a, 15b aufweist, so dass während der Hinfahrt (Figur 15c) aus der Öffnung ausgegebenes partikelförmiges Baumaterial mit einem ersten Streichelement 15a überstreichbar ist und während der Rückfahrt (Figur 15b) aus der Öffnung ausgegebenes partikelförmiges Baumaterial mit einem zweiten Streichelement 15b überstreichbar ist, und wobei die Einstellvorrichtung 13 eingerichtet ist, um für die Hinfahrt den Neigungswinkel α der Streichfläche des ersten Streichelements 15a für eine Nivellierung und/oder Verdichtung des ausgegebenen partikelförmigen Baumaterials und für die Rückfahrt den Neigungswinkel α der Streichfläche des zweiten Streichelements 15b für eine Nivellierung und/oder Verdichtung des ausgegebenen partikelförmigen Baumaterials einzustellen.

Dabei wird die Einstellvorrichtung 13 derart von der Steuereinheit C angesteuert, dass sie den Beschichter 3 für die Hinfahrt in eine erste Richtung schwenkt (hier nach links), um dadurch den Neigungswinkel α der Streichfläche des ersten Streichelements 15a für eine Nivellierung und/oder Verdichtung des ausgegebenen partikelförmigen Baumaterials einzustellen, und um den Beschichter 3 für die Rückfahrt in eine zweite, der ersten Richtung entgegengesetzten Richtung schwenkt (hier nach rechts), um dadurch den Neigungswinkel α der Streichfläche des zweiten Streichelements 15b für eine Nivellierung und/oder Verdichtung des ausgegebenen partikelförmigen Baumaterials einzustellen.

Wie aus den Figuren 15b und 15c zudem ersichtlich, können bei einem Verfahren zum Aufbringen zweier Schichten aus partikelförmigem Baumaterial zum Beispiel:
ein Beschichter 3 mit einem Behälter 17, der einen inneren Hohlraum hat, der mit partikelförmigem Baumaterial PM gefüllt ist und in einer Öffnung zum Ausgeben des partikelförmigen Baumaterials mündet, in einer ersten Richtung über ein Baufeld hinweg bewegt werden, um während einer ersten Fahrt eine erste Schicht aus Baumaterial auszubilden (siehe Figur 15c),
das während der ersten Fahrt aus der Öffnung ausgegebene partikelförmige Baumaterial mit einem ersten Streichelement 15a, von dem eine dem Baufeld zugewandte Streichfläche ausgebildet ist, überstrichen werden, um das ausgegebene Partikelmaterial mit der Streichfläche zu nivellieren und/oder zu verdichten,
der Beschichter 3 in einer zweiten Richtung über das Baufeld hinweg bewegt werden (siehe Figur 15b), um während einer zweiten Fahrt eine zweite Schicht aus Baumaterial auszubilden,
das während der zweiten Fahrt aus der Öffnung ausgegebene partikelförmige Baumaterial mit einem zweiten Streichelement 15b, von dem eine dem Baufeld zugewandte Streichfläche ausgebildet ist, überstrichen werden, um das ausgegebene Partikelmaterial mit der Streichfläche zu nivellieren und/oder zu verdichten,
der Beschichter 3 für die erste Fahrt in eine erste Richtung geschwenkt werden, um dadurch den Neigungswinkel α der Streichfläche des ersten Streichelements 15a für eine Nivellierung und/oder Verdichtung des ausgegebenen partikelförmigen Baumaterials einzustellen, und
der Beschichter 3 für die zweite Fahrt in eine zweite Richtung geschwenkt werden, um dadurch den Neigungswinkel α der Streichfläche des zweiten Streichelements 15b für eine Nivellierung und/oder Verdichtung des ausgegebenen partikelförmigen Baumaterials einzustellen.

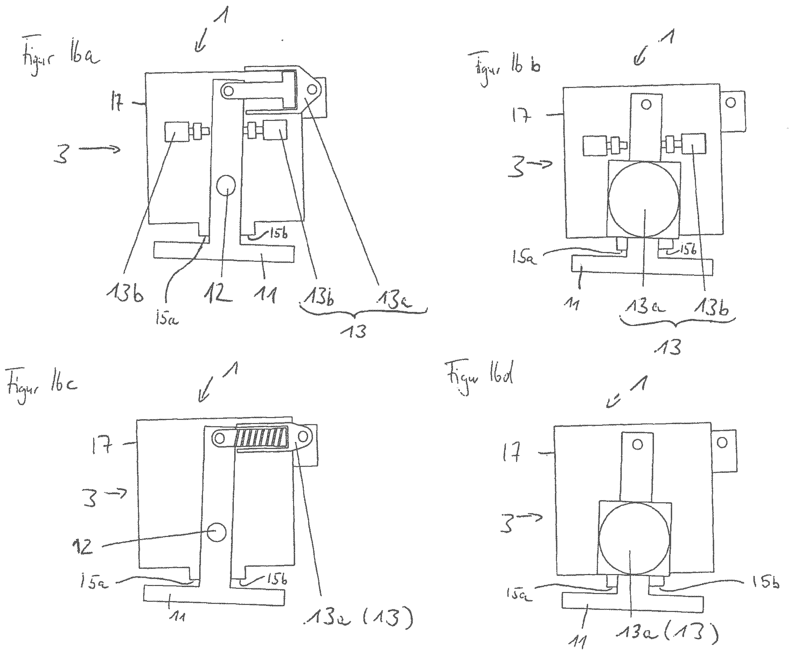

Die Figuren **16a bis 16d** zeigen Beschichteranordnungen gemäß verschiedenen Ausführungsformen.

Die in **Figur 16a** gezeigte Beschichteranordnung ist der in Figur 15a gezeigten Beschichteranordnung ähnlich ausgebildet, und daher wird auf eine detaillierte Beschreibung davon verzichtet. Wie gezeigt, kann gemäß dieser Ausführungsform eine Beschichteranordnung 1 zum Beispiel einen "Behälter-Beschichter" 3 (zum Beispiel "Schlitz-Beschichter") aufweisen, der ein oder mehrere Streichelemente 15a, 15b aufweist. Die Beschichteranordnung 1 weist ferner eine Einstellvorrichtung 13 auf, die eingerichtet ist, um einen Neigungswinkel der (jeweiligen) Streichfläche variabel einzustellen. Die Einstellvorrichtung 13 weist hier beispielgebend auf einen Linearantrieb 13a (zum Beispiel Hydraulik-Linearantrieb) und eine Anschlagstruktur mit mindestens einem Anschlag 13b. Der Anschlag 13b und somit der Neigungswinkel kann manuell oder über einen Elektroantrieb eingestellt werden.

**Figur 16b**zeigt eine Beschichteranordnung gemäß einer weiteren Ausführungsform. Wie gezeigt, kann gemäß dieser Ausführungsform eine Beschichteranordnung 1 zum Beispiel einen "Behälter-Beschichter" 3 (zum Beispiel "Schlitz-Beschichter") aufweisen, der ein oder mehrere Streichelemente 15a, 15b aufweist. Die Beschichteranordnung 1 weist ferner eine Einstellvorrichtung 13 auf, die eingerichtet ist, um einen Neigungswinkel der (jeweiligen) Streichfläche variabel einzustellen. Die Einstellvorrichtung 13 weist hier beispielgebend auf einen Schwenkantrieb, der ein Drehmoment ausgibt, und eine Anschlagstruktur mit mindestens einem Anschlag 13b. Der Anschlag 13b und somit der Neigungswinkel kann manuell oder über einen Elektroantrieb eingestellt werden.

**Figur 16c** zeigt eine Beschichteranordnung gemäß einer weiteren Ausführungsform. Wie gezeigt, kann gemäß dieser Ausführungsform eine Beschichteranordnung 1 zum Beispiel einen "Behälter-Beschichter" 3 (zum Beispiel "Schlitz-Beschichter") aufweisen, der ein oder mehrere Streichelementen 15a, 15b aufweist. Die Beschichteranordnung 1 weist ferner eine Einstellvorrichtung 13 auf, die eingerichtet ist, um einen Neigungswinkel der (jeweiligen) Streichfläche variabel einzustellen. Die Einstellvorrichtung 13 weist hier beispielgebend einen Linearantrieb 13a (zum Beispiel elektrischer Linearantrieb) auf. Eine Anschlagstruktur ist gemäß dieser Ausführungsform nicht erforderlich. Der Neigungswinkel kann gemäß dieser Ausführungsform direkt über den Antrieb 13a eingestellt werden.

**Figur 16d** zeigt eine Beschichteranordnung gemäß einer weiteren Ausführungsform. Wie gezeigt, kann gemäß dieser Ausführungsform eine Beschichteranordnung 1 zum Beispiel einen "Behälter-Beschichter" 3 (zum Beispiel "Schlitz-Beschichter") aufweisen, der ein oder mehrere Streichelemente 15a, 15b aufweist. Die Beschichteranordnung 1 weist ferner eine Einstellvorrichtung 13 auf, die eingerichtet ist, um einen Neigungswinkel der (jeweiligen) Streichfläche variabel einzustellen. Die Einstellvorrichtung 13 weist hier beispielgebend einen Schwenkantrieb 13a (zum Beispiel elektrischer Schwenkantrieb) auf. Eine Anschlagstruktur ist gemäß dieser Ausführungsform nicht erforderlich. Der Neigungswinkel kann gemäß dieser Ausführungsform direkt über den Antrieb 13a eingestellt werden.

Wie gezeigt, kann in jeder der vier beschriebenen Ausführungsformen der Beschichter 3 zum Beispiel als schwenkbarer Beschichter ausgeführt sein. Hierzu kann der Beschichter 3 zum Beispiel an zumindest einer seiner Stirnseiten schwenkbar an einem Lagerbock 11 befestigt sein, zum Beispiel unter Verwendung eines Schwenkzapfens 12.

In jeder der vier beschriebenen Ausführungsformen ist die Einstellvorrichtung 13 also als Schwenkvorrichtung ausgebildet, die eingerichtet ist, um den Beschichter 3 zu schwenken, um dadurch das mindestens eine Streichelement 15a zu schwenken und hierdurch den Neigungswinkel der Streichfläche einzustellen.

In jeder der vier beschriebenen Ausführungsformen kann die Beschichteranordnung 1 zum Beispiel eine (nicht gezeigte) Linearführungsstruktur aufweisen, entlang welcher der Beschichter 3 und/oder der Lagerbock 11 verfahrbar sind, zum Beispiel in den Figuren 16-16d von links nach rechts.

In jeder der vier beschriebenen Ausführungsformen kann die Beschichteranordnung 1 ferner eine wie in den Ansprüchen beschriebene Steuereinheit aufweisen.

## Patentansprüche

1. Beschichteranordnung (1) für einen 3D-Drucker (100), aufweisend:
einen Beschichter (3) mit einem Behälter (17), der einen inneren Hohlraum zur Aufnahme von partikelförmigem Baumaterial (PM) definiert, der in einer Öffnung zum Ausgeben des partikelförmigen Baumaterials mündet, und einem Streichelement (15a), von dem eine nach unten ausgerichtete Streichfläche ausgebildet ist und das eingerichtet ist, um aus der Öffnung ausgegebenes Baumaterial mit der Streichfläche zu überstreichen, um dadurch das ausgegebene Partikelmaterial zu nivellieren und/oder zu verdichten,
**gekennzeichnet durch**
eine Einstellvorrichtung (13), die eingerichtet ist, um einen Neigungswinkel (a) der Streichfläche variabel einzustellen,
wobei die Einstellvorrichtung (13) als Schwenkvorrichtung ausgebildet ist, die eingerichtet ist, um den Beschichter (3) zu schwenken, um dadurch das Streichelement (15a) zu schwenken und hierdurch den Neigungswinkel (a) der Streichfläche einzustellen.

2. Beschichteranordnung (1) nach Anspruch 1, wobei die Einstellvorrichtung (13) einen Antrieb (13a) aufweist, mit dem der Neigungswinkel (a) der Streichfläche veränderbar ist, wobei der Antrieb (13a) optional ein Linearantrieb oder ein Schwenk- oder Drehantrieb ist, wobei der Antrieb (13a) optional aus der Gruppe ausgewählt ist, die aus einem hydraulischen Antrieb, einem pneumatischen Antrieb, einem elektrischen Antrieb und Kombinationen davon besteht, und wobei der Antrieb (13a) optional eingerichtet ist, um den Neigungswinkel (α) der Streichfläche unmittelbar über den Antrieb selbst variabel einzustellen.

3. Beschichteranordnung (1) nach Anspruch 2, wobei die Einstellvorrichtung (13) ferner einen Anschlag (13b) aufweist, der eingerichtet ist, um eine von dem Antrieb (13a) erzeugte Bewegung auf ein bestimmtes Ausmaß zu begrenzen, um hierdurch den Neigungswinkel (α) der Streichfläche einzustellen, wobei der Anschlag (13b) optional variabel einstellbar ist, so dass durch ein Verstellen des Endanschlags der Neigungswinkel (α) der Streichfläche variabel einstellbar ist, wobei der Anschlag (13b) optional elektrisch verstellbar ist.

4. Beschichteranordnung (1) nach einem der vorangehenden Ansprüche, ferner aufweisend einen Lagerbock (11), an dem der Beschichter (3) schwenkbar abgestützt ist, und/oder eine Linearführungsstruktur (103), entlang welcher der Beschichter (3) verfahrbar ist, zum Beispiel zusammen mit dem Lagerbock.

5. Beschichteranordnung (1) nach einem der vorangehenden Ansprüche, ferner aufweisend eine Steuereinheit (C), die mit der Einstellvorrichtung (13), zum Beispiel mit dem Antrieb (13a) und/oder dem Anschlag (13b), in Verbindung steht und eingerichtet ist, um die Einstellvorrichtung derart anzusteuern, dass diese den Neigungswinkel (α) einstellt/verstellt, zum Beispiel auf einen anfänglichen Wert einstellt und/oder nachstellt, zum Beispiel während eines Baujobs, wobei die Steuereinheit (C) optional eingerichtet ist, um den Neigungswinkel (α) gemäß einer verwendeten Partikelmaterial-Zusammensetzung und/oder ein oder mehreren Umgebungsbedingungen und/oder einem gewünschten Verdichtungsgrad auf einen anfänglichen Wert einzustellen, zum Beispiel basierend auf einem jeweils zugehörigen, in der Steuereinheit hinterlegten Parameter oder Parametersatz.

6. Beschichteranordnung (1) nach einem der vorangehenden Ansprüche, ferner aufweisend:
einen Neigungssensor (Sα), der eingerichtet ist, um einen Wert zu erfassen, der repräsentativ ist für den momentanen Neigungswinkel (α) der Streichfläche.

7. Beschichteranordnung (1) nach Anspruch 6, wenn von Anspruch 5 abhängig, wobei der Neigungssensor (Sα) mit der Steuereinheit (C) in Verbindung steht, und wobei die Steuereinheit ferner eingerichtet ist, den Neigungswinkel (α) basierend auf dem von dem Neigungssensor erfassten Wert einzustellen, zum Beispiel auf einen anfänglichen Wert einzustellen und/oder nachzustellen.

8. Beschichteranordnung (1) nach einem der vorangehenden Ansprüche, ferner aufweisend:
einen Dichtesensor (Sρ), der eingerichtet ist, um einen Wert zu erfassen, der repräsentativ ist für die Dichte einer aufgebrachten Schicht.

9. Beschichteranordnung (1) nach Anspruch 8, wenn von Anspruch 5 oder 7 abhängig, wobei der Dichtesensor (Sρ) mit der Steuereinheit (C) in Verbindung steht, und wobei die Steuereinheit ferner eingerichtet ist, den Neigungswinkel (a) basierend auf dem von dem Dichtesensor (Sρ) erfassten Wert einzustellen, zum Beispiel nachzustellen, zum Beispiel um die Dichte auf einen Sollwert zu regeln und/oder einen Neigungswinkel-Sollwert in Abhängigkeit des erfassten Dichte-Werts zu verändern und/oder eine Störgröße zu reduzieren.

10. Beschichteranordnung (1) nach einem der vorangehenden Ansprüche, wobei:
der Beschichter (3) als bidirektionaler Beschichter ausgebildet ist, der eingerichtet ist, um Baumaterial auf einer Hinfahrt und einer Rückfahrt des Beschichters auszugeben,
der Beschichter (3) auf jeder von zwei sich gegenüberliegenden Seiten der Öffnung ein Streichelement (15a, 15b) aufweist, so dass während der Hinfahrt aus der Öffnung ausgegebenes partikelförmiges Baumaterial mit einem ersten der Streichelemente überstreichbar ist und während der Rückfahrt aus der Öffnung ausgegebenes partikelförmiges Baumaterial mit einem zweiten der Streichelemente überstreichbar ist, und
die Einstellvorrichtung (13) eingerichtet ist, um für die Hinfahrt den Neigungswinkel (α) der Streichfläche des ersten Streichelements (15a) für eine Nivellierung und/oder Verdichtung des ausgegebenen partikelförmigen Baumaterials und für die Rückfahrt den Neigungswinkel (α) der Streichfläche des zweiten Streichelements (15b) für eine Nivellierung und/oder Verdichtung des ausgegebenen partikelförmigen Baumaterials einzustellen.

11. Beschichteranordnung (1) nach Anspruch 10, wobei die Einstellvorrichtung (13) eingerichtet ist, den Neigungswinkel (α) der Streichfläche des ersten Streichelements (15a) und den Neigungswinkel (α) der Streichfläche des zweiten Streichelements (15b) gemeinsam zu verstellen.

12. Beschichteranordnung (1) nach Anspruch 10 oder 11, wobei die Einstellvorrichtung (13) eingerichtet ist, um den Beschichter (3) für die Hinfahrt in eine erste Richtung zu schwenken, um dadurch den Neigungswinkel (α) der Streichfläche des ersten Streichelements (15a) für eine Nivellierung und/oder Verdichtung des ausgegebenen partikelförmigen Baumaterials einzustellen, und um den Beschichter (3) für die Rückfahrt in eine zweite, der ersten Richtung entgegengesetzten Richtung zu schwenken, um dadurch den Neigungswinkel (a) der Streichfläche des zweiten Streichelements (15b) für eine Nivellierung und/oder Verdichtung des ausgegebenen partikelförmigen Baumaterials einzustellen.

13. 3D-Drucker (100), aufweisend eine Beschichteranordnung (1) nach einem der vorangehenden Ansprüche.

14. Verfahren zum Aufbringen zweier Schichten aus partikelförmigem Baumaterial, wobei
ein Beschichter (3) mit einem Behälter (17), der einen inneren Hohlraum hat, der mit partikelförmigem Baumaterial (PM) gefüllt ist und in einer Öffnung zum Ausgeben des partikelförmigen Baumaterials mündet, in einer ersten Richtung über ein Baufeld hinweg bewegt wird, um während einer ersten Fahrt eine erste Schicht aus Baumaterial auszubilden,
das während der ersten Fahrt aus der Öffnung ausgegebene partikelförmige Baumaterial mit einem ersten Streichelement (15a), von dem eine dem Baufeld zugewandte Streichfläche ausgebildet ist, überstrichen wird, um das ausgegebene Partikelmaterial mit der Streichfläche zu nivellieren und/oder zu verdichten,
**dadurch gekennzeichnet, dass**
der Beschichter (3) in einer zweiten Richtung über das Baufeld hinweg bewegt wird, um während einer zweiten Fahrt eine zweite Schicht aus Baumaterial auszubilden,
das während der zweiten Fahrt aus der Öffnung ausgegebene partikelförmige Baumaterial mit einem zweiten Streichelement (15b), von dem eine dem Baufeld zugewandte Streichfläche ausgebildet ist, überstrichen wird, um das ausgegebene Partikelmaterial mit der Streichfläche zu nivellieren und/oder zu verdichten,
der Beschichter (3) für die erste Fahrt in eine erste Richtung geschwenkt wird, um dadurch den Neigungswinkel (α) der Streichfläche des ersten Streichelements (15a) für eine Nivellierung und/oder Verdichtung des ausgegebenen partikelförmigen Baumaterials einzustellen, und
der Beschichter (3) für die zweite Fahrt in eine zweite Richtung geschwenkt wird, um dadurch den Neigungswinkel (α) der Streichfläche des zweiten Streichelements (15b) für eine Nivellierung und/oder Verdichtung des ausgegebenen partikelförmigen Baumaterials einzustellen.

## Claims

1. Coating device arrangement (1) for a 3D printer (100), comprising:
a coating device (3) having a container (17) defining an inner cavity for receiving particulate construction material (PM) which leads to an opening for outputting the particulate construction material, and a stroking member (15a), by which a downward oriented stroking surface is formed and which is configured to stroke over construction material output from the opening using the stroking surface, to thereby level and/or compress the output particulate material,
**characterized by**
a setting device (13) configured to variably set an inclination angle (α) of the stroking surface,
wherein the setting device (13) is formed as a pivot device which is configured to pivot the coating device (3) to thereby pivot the stroking member (15a) and to hereby set the inclination angle (α) of the stroking surface, and
further comprising a bearing block (11) at which the coating device (3) is pivotably supported.

2. Coating device arrangement (1) according to claim 1, wherein the setting device (13) comprises a drive (13a) by which the inclination angle (a) of the stroking surface is modifiable, wherein the drive (13a) is optionally a linear drive or a pivot or rotary drive, wherein the drive (13a) is optionally chosen from the group consisting of a hydraulic drive, a pneumatic drive, an electric drive and combinations thereof, and wherein the drive (13a) is optionally configured to variably set the inclination angle (α) of the stroking surface directly using the drive itself.

3. Coating device arrangement (1) according to claim 2, wherein the setting device (13) further comprises a limit stop (13b) configured to limit a movement generated by the drive (13a) to a particular degree to hereby set the inclination angle (α) of the stroking surface, wherein the limit stop (13b) is optionally variably adjustable, so that the inclination angle (α) of the stroking surface is variably adjustable by adjusting the limit stop, wherein the limit stop (13b) is optionally electrically adjustable.

4. Coating device arrangement (1) according to any one of the preceding claims, further comprising a linear guiding structure (103) along which the coating device (3) is displaceable, for example together with the bearing block.

5. Coating device arrangement (1) according to any one of the preceding claims, further comprising a control unit (C) which is connected to the setting device (13), for example to the drive (13a) and/or to the limit stop (13b), and which is configured to control the setting device in such a manner that the latter sets/adjusts the inclination angle (α), for example sets and/or readjusts the inclination angle (α) to an initial value, for example during a construction job, wherein the control unit (C) is optionally configured to set the inclination angle (α) according to a used particulate material composition and/or one or more ambient conditions and / or a desired degree of compression to an initial value, for example based on a respectively associated parameter or set of parameters stored in the control unit.

6. Coating device arrangement (1) according to any one of the preceding claims, further comprising:
an inclination sensor (Sα) which is configured to measure a value which is representative of the current inclination angle (α) of the stroking surface.

7. Coating device arrangement (1) according to claim 6, when dependent on claim 5, wherein the inclination sensor (Sα) is connected to the control unit (C), and wherein the control unit is further configured to set the inclination angle (α) based on the value measured by the inclination sensor, for example to set and/or readjust the inclination angle (a) to an initial value.

8. Coating device arrangement (1) according to any one of the preceding claims, further comprising:
a density sensor (Sρ) which is configured to measure a value which is representative of the density of an applied layer.

9. Coating device arrangement (1) according to claim 8, when dependent on claim 5 or 7, wherein the density sensor (Sρ) is connected to the control unit (C), and wherein the control unit is further configured to set, for example to readjust, the inclination angle (α) based on the value measured by the density sensor (Sρ), for example to regulate the density to a desired value and/or to change a desired value of the inclination angle depending on the measured density value and/or to reduce a disturbance value.

10. Coating device arrangement (1) according to any one of the preceding claims, wherein:
the coating device (3) is formed as a bidirectional coating device configured to output construction material on a journey and on a return journey of the coating device,
the coating device (3) comprises a stroking member (15a, 15b) on each of two opposite sides of the opening, so that particulate construction material output from the opening during the journey can be stroked using a first one of the stroking members, and particulate construction material output from the opening during the return journey can be stroked using a second one of the stroking members, and
the setting device (13) is configured to set the inclination angle (a) of the stroking surface of the first stroking member (15a) for a leveling and/or compression of the output particulate construction material for the journey, and to set the inclination angle (a) of the stroking surface of the second stroking member (15b) for a leveling and/or compression of the output particulate construction material for the return journey.

11. Coating device arrangement (1) according to claim 10, wherein the setting device (13) is configured to adjust the inclination angle (a) of the stroking surface of the first stroking member (15a) and the inclination angle (a) of the stroking surface of the second stroking member (15b) together.

12. Coating device arrangement (1) according to claim 10 or 11, wherein the setting device (13) is configured to pivot the coating device (3) in a first direction for the journey, to thereby set the inclination angle (a) of the stroking surface of the first stroking member (15a) for a leveling and/or compression of the output particulate construction material, and to pivot the coating device (3) in a second direction opposite to the first direction for the return journey, to thereby set the inclination angle (a) of the stroking surface of the second stroking member (15b) for a leveling and/or compression of the output particulate construction material.

13. 3D printer (100), comprising a coating device arrangement (1) according to any one of the preceding claims.

14. Method for applying two layers of a particulate construction material, wherein
a coating device (3) including a container (17) having an inner cavity which is filled with particulate construction material (PM) and leads to an opening for outputting the particulate construction material is moved in a first direction across a construction field to form a first layer of construction material during a first travel,
the particulate construction material output from the opening during the first travel is stroked using a first stroking member (15a) by which a stroking surface, facing the construction field, is formed to level and/or to compress the output particulate material using the stroking surface,
**characterized in that**
the coating device (3) is moved in a second direction across the construction field to form a second layer of construction material during a second travel,
the particulate construction material output from the opening during the second travel is stroked using a second stroking member (15b) by which a stroking surface, facing the construction field, is formed to level and/or compress the output particulate material using the stroking surface,
the coating device (3) is pivoted in a first direction for the first travel to thereby set the inclination angle (a) of the stroking surface of the first stroking member (15a) for a leveling and/or compression of the output particulate construction material, and
the coating device (3) is pivoted in a second direction for the second travel to thereby set the inclination angle (a) of the stroking surface of the second stroking member (15b) for a leveling and/or compression of the output particulate construction material.

## Revendications

1. Système de revêtement (1) pour une imprimante 3D (100), comprenant :
un dispositif de revêtement (3) avec un récipient (17), qui définit un premier espace creux interne pour le logement d'un matériau de construction particulaire (PM), qui débouche dans une ouverture pour la distribution du matériau de construction particulaire, et un élément d'enduction (15a), à partir duquel une surface d'enduction orientée vers le bas est réalisée et qui est conçu pour niveler et/ou compacter le matériau particulaire distribué,
**caractérisé par**
un dispositif de réglage (13) qui est conçu pour le réglage variable d'un angle d'inclinaison (α) de la surface d'enduction,
dans lequel le dispositif de réglage (13) est conçu comme un dispositif de pivotement qui est conçu pour faire pivoter le dispositif de revêtement (3), afin de faire pivoter l'élément d'enduction (15a) et de régler ainsi l'angle d'inclinaison (α) de la surface d'enduction et
comprenant en outre un support de palier (11) contre lequel le dispositif de revêtement (3) est appuyé de manière pivotante.

2. Système de revêtement (1) selon la revendication 1, dans lequel le dispositif de réglage (13) comprend un dispositif d'entraînement (13a), avec lequel l'angle d'inclinaison (α) de la surface d'enduction peut être modifié, dans lequel le dispositif d'entraînement (13a) est, en option, un dispositif d'entraînement linéaire, pivotant ou rotatif, dans lequel le dispositif d'entraînement (13a) est sélectionné en option dans le groupe constitué d'un dispositif d'entraînement hydraulique, d'un dispositif d'entraînement pneumatique, d'un dispositif d'entraînement électrique et de combinaisons de ceux-ci et dans lequel le dispositif d'entraînement (13a) est conçu, en option, pour régler de manière variable l'angle d'inclinaison (α) de la surface d'enduction directement au moyen du dispositif d'entraînement lui-même.

3. Système de revêtement (1) selon la revendication 2, dans lequel le dispositif de réglage (13) comprend en outre une butée (13b) qui est conçue pour limiter un mouvement généré par le dispositif d'entraînement (13a) à une valeur déterminée, afin de régler l'angle d'inclinaison (α) de la surface d'enduction, dans lequel la butée (13b) est en option réglable de manière variable, de façon à ce qu'un mouvement de la butée finale permet de régler de manière variable l'angle d'inclinaison (α) de la surface d'enduction, dans lequel la butée (13b) est en option réglable électriquement.

4. Système de revêtement (1) selon l'une des revendications précédentes, comprenant en outre une structure de guidage linéaire (103) le long de laquelle le dispositif de revêtement (3) peut être déplacé, par exemple conjointement avec le support de palier.

5. Système de revêtement (1) selon l'une des revendications précédentes, comprenant en outre une unité de commande (C), qui est reliée avec le dispositif de réglage (13), par exemple avec le dispositif d'entraînement (13a) et/ou la butée (13b) et qui est conçue pour commander le dispositif de réglage de façon à ce que celui-ci règle/ajuste l'angle d'inclinaison (α), par exemple le règle et/ou l'ajuste à une valeur initiale, par exemple pendant une tâche de construction, dans lequel l'unité de commande (C) est conçue, en option, pour régler l'angle d'inclinaison (α) en fonction d'une composition du matériau particulaire utilisé et/ou d'une ou plusieurs conditions environnementales et/ou d'un degré de compactage souhaité, à une valeur initiale, par exemple sur la base d'un paramètre ou d'un ensemble de paramètres correspondants enregistrés dans l'unité de commande.

6. Système de revêtement (1) selon l'une des revendications précédentes, comprenant en outre :
un capteur d'inclinaison (Sα) qui est conçu pour mesurer une valeur qui est représentative de l'angle d'inclinaison (α) instantané de la surface d'enduction.

7. Système de revêtement (1) selon la revendication 6, si dépendante de la revendication 5, dans lequel le capteur d'inclinaison (Sα) est relié avec l'unité de commande (C) et dans lequel l'unité de commande est en outre conçue pour régler et/ou ajuster l'angle d'inclinaison (a) sur la base de la valeur mesurée par le capteur d'inclinaison, par exemple à une valeur initiale.

8. Système de revêtement (1) selon l'une des revendications précédentes, comprenant en outre :
un capteur de densité (Sρ) qui est conçu pour mesurer une valeur représentative de la densité d'une couche appliquée.

9. Système de revêtement (1) selon la revendication 8, si dépendante de la revendication 5 ou 7, dans lequel le capteur de densité (Sρ) est relié avec l'unité de commande (C) et dans lequel l'unité de commande est en outre conçue pour ajuster l'angle d'inclinaison (α) sur la base de la valeur mesurée par le capteur de densité (Sρ) par exemple pour réguler la densité à une valeur de consigne et/ou pour modifier une valeur de consigne de l'angle d'inclinaison en fonction de la valeur de densité mesurée et/ou réduire une grandeur perturbatrice.

10. Système de revêtement (1) selon l'une des revendications précédentes, dans lequel :
le dispositif de revêtement (3) est conçu comme un dispositif de revêtement bidirectionnel qui est conçu pour distribuer un matériau de construction lors d'un aller et d'un retour du dispositif de revêtement,
le dispositif de revêtement (3) comprend, sur chacun de deux côtés opposés de l'ouverture, un élément d'enduction (15a, 15b), de façon à ce que, pendant l'aller, le matériau de construction particulaire distribué par l'ouverture soit balayé par un premier élément d'enduction et pendant le retour, le matériau de construction particulaire distribué par l'ouverture soit balayé par un deuxième élément d'enduction, et
le dispositif de réglage (13) est conçu pour régler, pendant l'aller, l'angle d'inclinaison (α) de la surface d'enduction du premier élément d'enduction (15a) pour un nivelage et/ou un compactage du matériau de construction particulaire distribué et, pendant le retour, l'angle d'inclinaison (α) de la surface d'enduction du deuxième élément d'enduction (15b) pour un nivellement et/ou un compactage du matériau de construction particulaire distribué.

11. Système de revêtement (1) selon la revendication 10, dans lequel le dispositif de réglage (13) est conçu pour régler conjointement l'angle d'inclinaison (α) de la surface d'enduction du premier élément d'enduction (15a) et l'angle d'inclinaison (α) de la surface d'enduction du deuxième élément d'enduction (15b).

12. Système de revêtement (1) selon la revendication 10 ou 11, dans lequel le dispositif de réglage (13) est conçu pour faire pivoter le dispositif de revêtement (3) pendant l'aller dans une première direction, afin de régler l'angle d'inclinaison (α) de la surface d'enduction du premier élément d'enduction (15a) pour un nivellement et/ou un compactage du matériau particulaire distribué et pour faire pivoter le dispositif de revêtement (3) pendant l'aller dans une deuxième direction, opposée à la première direction, afin de régler l'angle d'inclinaison (α) de la surface d'enduction du deuxième élément d'enduction (15b) pour un nivellement et/ou un compactage du matériau particulaire distribué.

13. Imprimante 3D (100) comprenant un système de revêtement (1) selon l'une des revendications précédentes.

14. Procédé d'application de deux couches de matériau de construction particulaire, dans lequel
un dispositif de revêtement (3) avec un récipient (17), qui comprend un espace creux interne rempli d'un matériau de construction particulaire (PM) et qui débouche dans une ouverture pour la distribution du matériau de construction particulaire, est déplacé dans une première direction au-dessus d'une zone de construction, afin de former, pendant un premier déplacement, une première couche de matériau de construction,
le matériau de construction particulaire distribué par l'ouverture pendant le premier déplacement, est balayé avec un premier élément d'enduction (15a), qui constitue une surface d'enduction orientée vers la zone de construction, afin de niveler et/ou de compacter le matériau particulaire avec la surface d'enduction,
**caractérisé en ce que**
le dispositif de revêtement (3) est déplacé dans une deuxième direction au-dessus de la zone de construction afin de former, pendant un deuxième déplacement, une deuxième couche de matériau de construction,
le matériau de construction particulaire distribué par l'ouverture pendant le deuxième déplacement est balayé avec un deuxième élément d'enduction (15b), qui constitue une surface d'enduction orientée vers la zone de construction, afin de niveler et/ou de compacter le matériau particulaire distribué avec la surface d'enduction,
le dispositif de revêtement (3) est pivoté pendant le premier déplacement dans une première direction afin de régler l'angle d'inclinaison (α) de la surface d'enduction du premier élément d'enduction (15a) pour un nivellement et/ou un compactage du matériau de construction particulaire distribué et
le dispositif de revêtement (3) est pivoté pendant le deuxième déplacement dans une deuxième direction afin de régler l'angle d'inclinaison (α) de la surface d'enduction du deuxième élément d'enduction (15b) pour un nivellement et/ou un compactage du matériau de construction particulaire distribué.
